(19) Europäisches Patentamt
European Patent Office
Office européen des brevets

(11) EP 4 491 639 A1

(12) EUROPEAN PATENT APPLICATION
published in accordance with Art. 153(4) EPC

(43) Date of publication:
**15.01.2025 Bulletin 2025/03**

(21) Application number: **23766611.0**

(22) Date of filing: **27.02.2023**

(51) International Patent Classification (IPC):
***C08F 4/654*** *(2006.01)* ***C08F 10/06*** *(2006.01)*

(52) Cooperative Patent Classification (CPC):
**C08F 4/654; C08F 10/06;** Y02P 20/52

(86) International application number:
**PCT/JP2023/006922**

(87) International publication number:
**WO 2023/171433 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.03.2022 JP 2022038521**

(71) Applicant: **TOHO TITANIUM CO., LTD.**
**Chigasaki-shi, Kanagawa 253-8510 (JP)**

(72) Inventors:
- **SAKEMI Takaharu**
  **Chigasaki-shi, Kanagawa 253-8510 (JP)**
- **KONO Hiroyuki**
  **Chigasaki-shi, Kanagawa 253-8510 (JP)**
- **OGAWA Hayashi**
  **Chigasaki-shi, Kanagawa 253-8510 (JP)**
- **UOZUMI Toshiya**
  **Chigasaki-shi, Kanagawa 253-8510 (JP)**

(74) Representative: **Müller-Boré & Partner Patentanwälte PartG mbB**
**Friedenheimer Brücke 21**
**80639 München (DE)**

# (54) SOLID CATALYST INGREDIENT FOR OLEFIN POLYMERIZATION, METHOD FOR PRODUCING SOLID CATALYST INGREDIENT FOR OLEFIN POLYMERIZATION, CATALYST FOR OLEFIN POLYMERIZATION, METHOD FOR PRODUCING OLEFIN POLYMER, AND OLEFIN POLYMER

(57) Provided is a solid catalyst component for polymerization of an olefin comprising an internal electron-donating compound other than phthalate esters, capable of easily producing a polymer of an olefin with excellent flowability and high rigidity, and further capable of easily producing a copolymer having a practically sufficient block rate and flowability under excellent copolymerization activity.

A solid catalyst component for polymerization of an olefin comprising: magnesium, titanium, halogen, and a succinic acid diester compound, wherein a content of the succinic acid diester compound in a total content of the components in terms of the solid content is 15.0% by mass or more, a ratio (S/T), represented by a content of the succinic acid diester compound (S) in the total content of the components to a content of the titanium (T) in the total content of the components, is 0.60 to 1.30 in a molar ratio, and a total pore volume of a diameter of 1 μm or less as measured by a mercury intrusion method is 0.3 to 1.0 $cm^3/g$, and a specific surface area is 200 $m^2/g$ or more.

EP 4 491 639 A1

## Description

[Technical Field]

The present invention relates to a solid catalyst component for polymerization of an olefin, a method for producing a solid catalyst component for polymerization of an olefin, a catalyst for polymerization of an olefin, a method for producing a polymer of an olefin, and a polymer of an olefin.

[Background Art]

In recent years, polymers of olefins such as polypropylene (PP) are utilized for various applications such as containers and films in addition to molded products such as automobile parts and household appliances.

A polypropylene resin composition is lightweight and highly moldable, excellent in chemical stability such as heat resistance and chemical resistance of molded articles, and extremely excels in cost-effectiveness. For this reason, such a resin composition is used in many fields as one of the most important plastic materials.

For further expanding applications, propylene capable of being used as a substitute for polystyrene and an ABS resin with a high melt flow rate (MFR), excellent moldability and high rigidity has been in demand.

For polymerizing olefins such as propylene, a polymerization method using a solid catalyst component comprising a magnesium atom, a titanium atom, a halogen atom, and an internal electron-donating compound as essential components is known, and many methods for polymerizing or copolymerizing olefins in the presence of a catalyst for polymerization of an olefin composed of the above solid catalyst components, an organoaluminum compound, and an organosilicon compound are proposed.

For example, Patent Literature 1 proposes a method for polymerizing propylene using a catalyst for polymerization of an olefin comprising a solid titanium catalyst component on which an internal electron-donating compound such as phthalate esters is supported, an organoaluminum compound as a cocatalyst component, and an organosilicon compound having at least one Si-O-C bond. Many literatures including Patent Literature 1 propose the method for obtaining a highly tactic polymer using a phthalate ester as an internal electron-donating compound under high polymerization activity.

[Citation List]

[Patent Literature]

[Patent Literature 1] Japanese Patent Laid-Open No. 57-63310

[Summary of Invention]

[Technical Problem]

However, di-n-butyl phthalate and butyl benzyl phthalate, a kind of the phthalate ester, are designated as Substance of Very High Concern (SVHC) under The Regulation on the Registration, Evaluation, Authorization and Restriction of Chemicals (REACH) in Europe. For this reason, a demand for converting to a SVHC substance free catalyst system has been increasing from the view point of reducing environmental impact.

So far, there is no known solid catalyst component for polymerization of an olefin capable of producing a polymer of an olefin with excellent flowability having a melt flow rate (MFR) of as high as 0.5 g/10 min to 200.0 g/10 min, and with excellent rigidity having a flexural modulus (FM) of as high as 2000 MPa or more.

Further, for example, when a solid catalyst component containing cyclohexane dicarboxylate diester as an internal electron-donating compound other than phthalate esters is used for polymerizing olefins, the tacticity of a polymer to be obtained reaches the level equivalent to a solid catalyst component that uses phthalate esters. However, neither copolymerization activity during copolymerization or a block rate of a copolymer to be obtained is considered a high level, and a copolymer to be obtained is sticky and likely adheres to a pipe and the like to result in poor flowability at a pipe and the like, thereby posing a technical issue of being difficult when handling.

Thus, in the case of using an internal electron-donating compound other than phthalate esters, there is no known solid catalyst component capable of practically achieving tacticity and molecular weight distribution broadness of a polymer to be obtained, the copolymerization activity, and block rate and flowability (less stickiness) of a copolymer to be obtained in well balance.

Under such circumstances, the present invention aims to provide a solid catalyst component for polymerization of an olefin comprising an internal electron-donating compound other than phthalate esters, capable of easily producing a

polymer of an olefin with an excellent melt flow rate and high rigidity, and further capable of easily producing a copolymer having a practically sufficient block rate and flowability (less stickiness) under excellent copolymerization activity, and also provide a catalyst for polymerization of an olefin, a method for producing a polymer of an olefin, and a polymer of an olefin.

[Solution to Problem]

For achieving the above technical issue, the present inventors conducted extensive studies and consequently found that the above technical issues can be achieved by the solid catalyst component for polymerization of an olefin comprising magnesium, titanium, halogen, and a succinic acid diester compound, wherein a content of the succinic acid diester compound in the total content of the components in terms of the solid content is 15.0% by mass or more, a ratio (S/T), represented by a content of the succinic acid diester compound (S) in the total content of the components to a content of the titanium (T) in the total content of the components, is 0.60 to 1.30 in a molar ratio, and the total pore volume of a diameter of 1 μm or less as measured by a mercury intrusion method is 0.3 to 1.0 $cm^3/g$, and a specific surface area is 200 $m^2/g$ or more, based on which the present invention has come to accomplishment.

More specifically, the present invention provides;

(i) a solid catalyst component for polymerization of an olefin comprising:

magnesium, titanium, halogen, and a succinic acid diester compound,
wherein a content of the succinic acid diester compound in a total content of the components in terms of the solid content is 15.0% by mass or more,
a ratio (S/T), represented by a content of the succinic acid diester compound (S) in the total content of the components to a content of the titanium (T) in the total content of the components, is 0.60 to 1.30 in a molar ratio, and
a total pore volume of a diameter of 1 μm or less as measured by a mercury intrusion method is 0.3 to 1.0 $cm^3/g$, and a specific surface area is 200 $m^2/g$ or more

(ii) the solid catalyst component for polymerization of an olefin according to the above (i), wherein the succinic acid diester compound is one or more compounds selected from the compounds represented by the following formula (1):

[Formula 1]

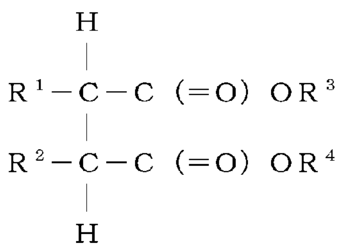

(1)

wherein $R^1$ and $R^2$, the same as or different from each other, are a hydrogen atom or an alkyl group having 1 to 4 carbon atoms, and $R^3$ and $R^4$, the same as or different from each other, are a straight chain alkyl group or a branched chain alkyl group having 2 to 4 carbon atoms,
(iii) a method for producing a solid catalyst component for polymerization of an olefin by allowing dialkoxy magnesium, a titanium halogen compound and a succinic acid diester compound to mutually contact,

wherein the titanium halogen compound is allowed to contact the dialkoxy magnesium multiple times, of which when the titanium halogen halogen compound is allowed to contact the dialkoxy magnesium for the first time, 1.5 to 10.0 mol of the titanium halogen compound per mol of the dialkoxy magnesium is used,
wherein a total amount of the titanium compound used per mol of the dialkoxy magnesium is 5.0 to 18.0 mol, and an amount of the succinic acid diester compound used per mol of the dialkoxy magnesium is 0.10 to 0.20 mol,

(iv) a catalyst for polymerization of an olefin comprising:

(I) the solid catalyst component for polymerization of an olefin according to the above (i) or (ii), and
(II) an organoaluminum compound represented by the following formula (2):

$R^5{}_pAlQ_{3-p}$ (2)

wherein $R^5$ is an alkyl group having 1 to 6 carbon atoms, Q is a hydrogen atom or halogen, and p satisfies $0 < p \leq 3$, wherein when more than one $R^5$ are present, each $R^5$ may be the same as or different from each other, and when more than one Q are present, each Q may be the same or different,

(v) a catalyst for polymerization of an olefin comprising:

(I) the solid catalyst component for polymerization of an olefin according to the above (i) or (ii),
(II) an organoaluminum compound represented by the following formula (2):

$R^5{}_pAlQ_{3-p}$ (2)

wherein $R^5$ is an alkyl group having 1 to 6 carbon atoms, Q is a hydrogen atom or halogen, and p satisfies $0 < p \leq 3$, wherein when more than one $R^5$ are present, each $R^5$ may be the same as or different from each other, and when more than one Q are present, each Q may be the same or different, and
(III) an external electron-donating compound,

(vi) a method for producing a polymer of an olefin, comprising polymerizing an olefin using the catalyst for polymerization of an olefin according to the above (vi) or (v),
(vii) a polymer of an olefin having:

(a) a melt flow rate of 0.5 g/10 min to 200.0 g/10 min, and
(b) a flexural modulus of 2,000 MPa or more,

(viii) the polymer of an olefin according to the above (vii), wherein a percentage of oriented layers at the cross section of an injection molded plate formed of the polymer of an olefin is 20% or more, and
(ix) the polymer of an olefin according to the above (vii) or (viii), formed of a propylene polymer,

wherein, when the polymer of an olefin is measured by cross fractionation chromatography at a measuring temperature of 40 to 140°C,
a percentage of a total amount of a polymer of an olefin eluting at a measuring temperature of 120°C or more in a total amount of the polymer of an olefin to be measured is 20% by mass or more, and
a content percentage of the polymer of an olefin having a molecular weight of 1,000,000 or more in the total amount of the polymer of an olefin eluting at a measuring temperature of 120°C or more is 3% by mass or more.

[Advantageous Effects of Invention]

The present invention can accordingly provide a solid catalyst component for polymerization of an olefin comprising an internal electron-donating compound other than phthalate esters, capable of easily producing a polymer of an olefin with an excellent melt flow rate and high rigidity, and further capable of easily producing a copolymer having a practically sufficient block rate and flowability (less stickiness) under excellent copolymerization activity, and also provide a catalyst for polymerization of an olefin, a method for producing a polymer of an olefin, and a polymer of an olefin.

[Brief Description of Drawings]

[Figure 1] Figure 1 is a drawing showing a method for creating a measurement specimen for measuring a percentage of the oriented layers at the cross section of an injection molded plate of a polymer of an olefin.
[Figure 2] Figure 2 is drawings showing a method for creating a measurement specimen for measuring a percentage of the oriented layers at the cross section of an injection molded plate of a polymer of an olefin.
[Figure 3] Figure 3 is a drawing for showing a method for specifying percentages of the oriented layers.
[Figure 4] Figure 4 is a drawing for showing a method for measuring flowability of the polymer.

[Description of Embodiments]

First, the solid catalyst component for polymerization of an olefin according to the present invention will be

described.

The solid catalyst component for polymerization of an olefin according to the present invention comprises:

magnesium, titanium, halogen, and a succinic acid diester compound,
wherein a content of the succinic acid diester compound in the total content of the components in terms of the solid content is 15.0% by mass or more,
a ratio (S/T), represented by a content of the succinic acid diester compound (S) in the total content of the components to a content of the titanium (T) in the total content of the components, is 0.60 to 1.30 in a molar ratio, and
the total pore volume of a diameter of 1 μm or less as measured by a mercury intrusion method is 0.3 to 1.0 $cm^3/g$, and a specific surface area is 200 $m^2/g$ or more.

Examples of the solid catalyst component for polymerization of an olefin according to the present invention include a contact reactant obtained through a reaction in which a raw material component to be a source of magnesium supply, a raw material component to be a source of titanium and halogen supply, and the succinic acid diester compound which is an internal electron-donating compound are allowed to mutually contact in an organic solvent. Specific examples include a contact reactant obtained by using dialkoxy magnesium as the raw material component to be a source of magnesium supply and a tetravalent titanium halogen compound as the raw material component to be a source of titanium and halogen supply, and allowing these raw materials to mutually contact the internal electron-donating compound comprising the succinic acid diester compound.

In the solid catalyst component for polymerization of an olefin according to the present invention, examples of dialkoxy magnesium, which is the raw material component to be a source of magnesium supply, specifically include dimethoxy magnesium, diethoxymagnesium, dipropoxymagnesium, dibutoxy magnesium, ethoxymethoxy magnesium, ethoxypropoxy magnesium, and butoxyethoxy magnesium, with diethoxy magnesium being particularly preferable.

The above dialkoxy magnesium may be those obtained by reacting metal magnesium with alcohol in the presence of halogen or a halogen-containing metal compound.

The above dialkoxy magnesium is preferably granular or powder, and the usable shape thereof can be irregular or spherical.

When spherical dialkoxy magnesium is used, a polymer powder having even better particle shape (more spherical) and a narrower particle size distribution is obtained, whereby handling operability of the polymer powder formed during polymerization process is enhanced, and the occurrence of blockage and the like caused by the fine powder contained in the formed polymer powder can be inhibited.

The above spherical dialkoxy magnesium does not need to be true spherical, and oval shape or a potato shape dialkoxy magnesium can also be used.

The mean particle diameter (mean particle diameter D50) of the above dialkoxy magnesium is preferably 1.0 to 200.0 μm, and more preferably 5.0 to 150.0 μm. The mean particle diameter D50 herein means the particle size at 50% of accumulated particle sizes in the volume accumulated particle size distribution when measured using a laser diffraction scattering particle size analyzer.

When dialkoxy magnesium is spherical, the above mean particle diameter D50 is preferably 1.0 to 100.0 μm, more preferably 5.0 to 80.0 μm, and further preferably 10.0 to 70.0 μm.

Additionally, the particle size distribution of dialkoxy magnesium is preferably narrow particle size distribution with a small amount of fine powder and coarse powder.

Specifically, dialkoxy magnesium has, when measured using a laser diffraction scattering particle size analyzer, particles having a particle size of 5.0 μm or less of preferably 20% or less, and more preferably 10% or less. On the other hand, dialkoxy magnesium has, when measured using a laser diffraction scattering particle size analyzer, particles having a particle size of 100.0 μm or more of preferably 20% or less, and more preferably 10% or less.

Further, the particle size distribution, when represented by l n (D90/D10), is preferably 3 or less, and more preferably 2 or less. D90 herein means the particle size at 90% of accumulated particle sizes in the volume accumulated particle size distribution when measured using a laser diffraction scattering particle size analyzer. D10 herein means the particle size at 10% of accumulated particle sizes in the volume accumulated particle size distribution when measured using a laser diffraction scattering particle size analyzer.

The method for producing the above spherical dialkoxy magnesium are described in, for example, Japanese Patent Laid-Open No. 62-51633, Japanese Patent Laid-Open No. 3-74341, Japanese Patent Laid-Open No. 4-368391, Japanese Patent Laid-Open No. 8-73388 and the like.

In the solid catalyst component for polymerization of an olefin according to the present invention, dialkoxy magnesium has a specific surface area of preferably 5 $m^2/g$ or more, more preferably 5 to 50 $m^2/g$, and further preferably 10 to 40 $m^2/g$.

When dialkoxy magnesium having a specific surface area within the above range is used, a solid catalyst component for polymerization of an olefin having a desired specific surface area can be easily prepared.

In the present application document, the specific surface area of dialkoxy magnesium means the value measured by the BET method, and specifically the specific surface area of dialkoxy magnesium means the value obtained by vacuum drying a measurement specimen in advance at 50°C for 2 hours and measuring by the BET method (automatic measurement) using Automatic Surface Area Analyzer HM model-1230 manufactured by Mountech, in the presence of a mixed gas of nitrogen and helium.

The above dialkoxy magnesium is preferably in the form of a solution or a suspension when reacted, and the form of a solution or a suspension can allow the reaction to preferably proceed.

When the above dialkoxy magnesium is solid, the solid dialkoxy magnesium is dissolved in a solvent capable of solubilizing dialkoxy magnesium to prepare dialkoxy magnesium in the form of a solution, or suspended in a solvent incapable of solubilizing dialkoxy magnesium to prepare dialkoxy magnesium in the form of a suspension.

When the above dialkoxy magnesium is liquid, dialkoxy magnesium in the form of a solution may directly be used, or may further be dissolved in a solvent capable of solubilizing dialkoxy magnesium and used as dialkoxy magnesium in the form of a solution.

Examples of the compound capable of solubilizing solid dialkoxy magnesium include at least one compound selected from the group consisting of alcohol, ether, and ester, with alcohols such as ethanol, propanol, butanol, and 2-ethylhexanol being preferable, and 2-ethylhexanol being particularly preferable.

On the other hand, examples of the medium incapable of solubilizing solid dialkoxy magnesium include one or more solvents selected from saturated hydrocarbon solvents and unsaturated hydrocarbon solvents which do not dissolve dialkoxy magnesium.

In the solid catalyst component for polymerization of an olefin according to the present invention, the tetravalent titanium halogen compound as the raw material component to be a source of titanium and halogen supply is not particularly limited, but preferably one or more compounds selected from the group consisting of titanium halide and alkoxy titanium halide represented by the following formula (3)

$$Ti(OR^6)_rX_{4-r} \qquad (3)$$

wherein $R^6$ is an alkyl group having 1 to 4 carbon atoms, X is a halogen atom such as a chlorine atom, a bromine atom, an iodine atom, and r satisfies $0 \leq r \leq 3$.

In the above formula (3), r satisfies $0 \leq r \leq 3$, and specifically, r is 0, 1, 2, or 3.

Examples of the titanium halide represented by the above formula (3) include one or more titanium tetrahalides selected from titanium tetrachloride, titanium tetrabromide, titanium tetraiodide and the like.

Examples of the alkoxy titanium halide represented by the above formula (3) include one or more alkoxy titanium halides selected from methoxytitanium trichloride, ethoxytitanium trichloride, propoxytitanium trichloride, n-butoxytitanium trichloride, dimethoxytitanium dichloride, diethoxytitanium dichloride, dipropoxytitanium dichloride, di-n-butoxytitanium dichloride, trimethoxytitanium chloride, triethoxytitanium chloride, tripropoxytitanium chloride, tri-n-butoxytitanium chloride and the like.

The tetravalent titanium halogen compound is preferably titanium tetrahalide, and more preferably titanium tetrachloride.

These titanium compounds may be used singly, or 2 or more compounds can also be used in combination.

In the solid catalyst component for polymerization of an olefin according to the present invention, examples of the succinic acid diester compound include one or more compounds selected from the compounds represented by the following formula (1):

[Formula 2]

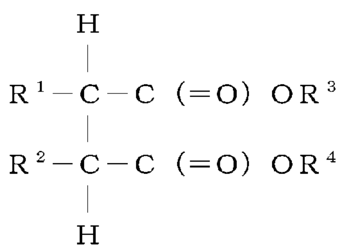

(1)

wherein, $R^1$ and $R^2$, the same as or different from each other, are a hydrogen atom or an alkyl group having 1 to 4 carbon atoms, and $R^3$ and $R^4$, the same as or different from each other, are a straight chain alkyl group or a branched chain alkyl group having 2 to 4 carbon atoms.

In the compound represented by the formula (1), $R^1$ and $R^2$, the same as or different from each other, are a

hydrogen atom or an alkyl group having 1 to 4 carbon atoms.

When $R^1$ or $R^2$ is an alkyl group having 1 to 4 carbon atoms, examples specifically include a methyl group, an ethyl group, a n-propyl group, an isopropyl group, a n-butyl group, and an isobutyl group.

In the compound represented by the formula (1), $R^3$ and $R^4$, the same as or different from each other, are a straight chain alkyl group or a branched chain alkyl group having 2 to 4 carbon atoms.

When $R^3$ and $R^4$ are a straight chain alkyl group or a branched chain alkyl group having 2 to 4 carbon atoms, examples specifically include an ethyl group, a n-propyl group, an isopropyl group, a n-butyl group, and an isobutyl group.

In the solid catalyst component for polymerization of an olefin according to the present invention, the succinic acid diester compound is not particularly limited as long as the compound is the dialkyl ester succinate represented by the formula (1), and examples include one or more compounds selected from diethyl succinate, diethyl 2,3-dimethylsuccinate, diethyl 2,3-diethylsuccinate, diethyl 2,3-di-n-propylsuccinate, diethyl 2,3-diisopropylsuccinate, diethyl 2,3-di-n-butylsuccinate, and diethyl 2,3-diisobutylsuccinate; di-n-propyl succinate, di-n-propyl 2,3-dimethylsuccinate, di-n-propyl 2,3-diethylsuccinate, di-n-propyl 2,3-di-n-propylsuccinate, di-n-propyl 2,3-diisopropylsuccinate, di-n-propyl 2,3-di-n-butylsuccinate, and di-n-propyl 2,3-diisobutylsuccinate;

diisopropyl succinate, diisopropyl 2,3-dimethylsuccinate, diisopropyl 2,3-diethylsuccinate, diisopropyl 2,3-di-n-propylsuccinate, diisopropyl 2,3-diisopropylsuccinate, diisopropyl 2,3-di-n-butylsuccinate, and diisopropyl 2,3-diisobutylsuccinate;

di-n-butyl succinate, di-n-butyl 2,3-dimethylsuccinate, di-n-butyl 2,3-diethylsuccinate, di-n-butyl 2,3-di-n-propylsuccinate, di-n-butyl 2,3-diisopropylsuccinate, din-butyl 2,3-di-n-butylsuccinate, and di-n-butyl 2,3-diisobutylsuccinate; and

diisobutyl succinate, diisobutyl 2,3-dimethylsuccinate, diisobutyl 2,3-diethylsuccinate, diisobutyl **2,3-di-n-**propylsuccinate, diisobutyl 2,3-diisopropylsuccinate, diisobutyl 2,3-di-n-butylsuccinate, and diisobutyl **2,3-**diisobutylsuccinate.

Of these dialkyl ester succinates, preferably used are diethyl succinate, di-n-propyl succinate, di-n-butyl succinate, diisobutyl succinate, diethyl **2,3-di-n-**propylsuccinate, diethyl 2,3-diisopropylsuccinate, **di-n-**propyl 2,3-di-n-propylsuccinate, di-n-propyl **2,3-**diisopropyl succinate, diisopropyl 2,3-di-n-propylsuccinate, diisopropyl 2,3-diisopropylsuccinate, di-n-butyl 2,3-di-n-propylsuccinate, di-n-butyl 2,3-diisopropylsuccinate, diisobutyl 2,3-di-n-propylsuccinate, and diisobutyl 2,3-diisopropylsuccinate.

The solid catalyst component for polymerization of an olefin according to the present invention comprises, as the essential component, a succinic acid diester compound as the internal electron-donating compound, but may further comprise other internal electron-donating compounds (hereinafter, referred appropriately to as "other internal electron-donating compounds") than these internal electron-donating compounds.

Examples of such other internal electron-donating compounds include one or more compounds selected from carbonates, acid halides, acid amides, nitriles, acid anhydrides, diether compounds, and carboxylic acid esters.

Examples of such other internal electron-donating compound specifically include one or more compounds selected from ether carbonate compounds, diester carboxylates such as diester cycloalkane dicarboxylate, diester cycloakene dicarboxylate, diester malonate, alkyl-substituted diester malonate, and diester maleate, and diether compounds.

More specifically, such other internal electron-donating compound is more preferably one or more compounds selected from ether carbonate compounds such as (2-ethoxyethyl)methyl carbonate, (2-ethoxyethyl)ethyl carbonate, and (2-ethoxyethyl)phenyl carbonate, diester dialkyl malonate such as dimethyl diisobutyl malonate, and diethyl diisobutyl malonate, diester cycloalkane dicarboxylate such as dimethyl cyclohexane-1,2-dicarboxylate, and 1,3-diethers such as (isopropyl) (isopentyl)-1,3-dimethoxy propane, and 9,9-bis)methoxymethyl)fluorene.

On the other hand, the solid catalyst component for polymerization of an olefin according to the present invention has a content of phthalate esters of suitably 0.2% by mass or less (0.0 to 0.2% by mass), more suitably 0.1% by mass or less (0.0 to 0.1% by mass), and further suitably 0.0% by mass (substantially free of phthalate esters (limit of detection or less)).

The solid catalyst component for polymerization of an olefin according to the present invention has, together with the succinic acid diester compound, other internal electron-donating compounds, whereby physical properties such as the hydrogen responsiveness during polymerization, the tacticity and molecular weight distribution of a polymer of an olefin to be obtained during polymerization can be easily controlled in the range equivalent to the polymer produced using the conventional solid catalyst comprising phthalate esters as the internal electron-donating compound.

The solid catalyst component for polymerization of an olefin according to the present invention has a content of the succinic acid diester compound of, in terms of the solid content, 15.0% by mass or more, preferably 17.0 to 25.0% by mass, and more preferably 20.0 to 23.0% by mass.

The solid catalyst component for polymerization of an olefin according to the present invention, when having a content of the succinic acid diester compound of 15.0% by mass or more in terms of the solid content, can easily produce a

polymer of an olefin with excellent flowability and high rigidity when used for polymerizing olefins.

The solid catalyst component for polymerization of an olefin according to the present invention composing the catalyst for polymerization of an olefin may comprise, and as described above, other internal electron-donating compounds, together with the succinic acid diester compound as the internal electron-donating compound as the main component, and the total content of the internal electron-donating compounds with the succinic acid diester compound as the main component is preferably 15.0% by mass or more, more preferably 17.0 to 30.0% by mass, and further preferably 20.0 to 30.0% by mass.

In the solid catalyst component for polymerization of an olefin according to the present invention, the ratio (S/T) represented by a content of the succinic acid diester compound (S) in the total content of the components to a content of the titanium (T) in the total content of the components, that is, the ratio represented by a content of the above succinic acid diester compound/a content of the above titanium in the solid catalyst component for polymerization of an olefin according to the present invention, is, in terms of the solid content, 0.60 to 1.30, preferably 0.60 to 1.10, and more preferably 0.70 to 1.10 in a molar ratio.

The solid catalyst component for polymerization of an olefin according to the present invention, when having the ratio (S/T) represented by a content of the succinic acid diester compound (S) in the total content of the components to a content of the titanium (T) in the total content of the components, that is, the ratio represented by a content of the above succinic acid diester compound/a content of the above titanium in the solid catalyst component for polymerization of an olefin according to the present invention, of 0.60 to 1.30 in a molar ratio, can easily produce a polymer of an olefin with an excellent melt flow rate and high rigidity when used for polymerizing olefins, and further can produce more easily and effectively a copolymer having a practically sufficient block rate and flowability (less stickiness) under excellent copolymerization activity.

Up to now, the succinic acid diester compound, when used as the internal electron-donating compound of a solid catalyst component for polymerization of an olefin, is expensive itself and has been considered as the compound that hardly enhances the tacticity of a polymer of an olefin to be obtained when used for polymerizing olefins. For this reason, the succinic acid diester compound has not been employed as the internal electron-donating compound of a solid catalyst component for polymerization of an olefin, or further an attempt of containing a large amount thereof has never been made. However, according to the studies by the present inventors, it is unexpectedly found that a high content of the succinic acid diester compound, that is, a content of the succinic acid diester compound is 15.0% by mass or more in the solid catalyst component for polymerization of an olefin, and the ratio represented by a content of the succinic acid diester compound/a content of titanium is 0.60 to 1.30 in a molar ratio, can produce a polymer of an olefin with higher than ever rigidity while ensuring practically useful flowability when the solid catalyst component for polymerization of an olefin is used for polymerizing olefins, whereby the present invention has come to accomplishment.

The solid catalyst component for polymerization of an olefin in the present invention may comprise a polysiloxane.

When the solid catalyst component for polymerization of an olefin in the present invention comprises a polysiloxane, the tacticity or crystallinity of a polymer to be obtained can be easily enhanced and further the fine powder of a formed polymer can be easily reduced when polymerizing olefins.

A polysiloxane, also known as a silicone oil, is a polymer with a siloxane bond (-Si-O-bond) in the main chain, has a viscosity at 25°C of 0.02 to 100.00 $cm^2/s$ (2 to 10000 centistokes), and more preferably 0.03 to 5.00 $cm^2/s$ (3 to 500 centistokes), and is in the form of a liquid or viscous chain, partially hydrogenated, cyclic or modified polysiloxane at an ambient temperature.

Examples of the chain polysiloxane include dimethyl polysiloxane and methyl phenyl polysiloxane, examples of the partially hydrogenated polysiloxane include methyl hydrogen polysiloxane having a hydrogenation rate of 10 to 80%, examples of the cyclic polysiloxane include one or more cyclic polysiloxanes selected from hexamethylcyclotrisiloxane, octamethylcyclotetrasiloxane, decamethylcyclopentasiloxane, 2,4,6-trimethylcyclotrisiloxane, and 2,4,6,8-tetramethylcyclotetrasiloxane.

It is preferable that the solid catalyst component for polymerization of an olefin according to the present invention be prepared by allowing the above dialkoxy magnesium, titanium halogen compound and succinic acid diester compound to contact in the presence of an inert organic solvent.

In the present invention, the above inert organic solvent preferably dissolves the titanium halogen compound and does not dissolve dialkoxy magnesium, and examples specifically include one or more compounds selected from saturated hydrocarbon compounds such as pentane, hexane, heptane, octane, nonane, decane, cyclohexane, methylcyclohexane, ethylcyclohexane, 1,2-diethylcyclohexane, methylcyclohexene, decalin, and a mineral oil, aromatic hydrocarbon compounds such as benzene, toluene, xylene, and ethylbenzene, and halogenated hydrocarbon compounds such as orthodichlorobenzene, methylene chloride, 1,2-dichlorobenzene, carbon tetrachloride, and dichloroethane.

For the above inert organic solvent, preferably used are saturated hydrocarbon compounds or aromatic hydrocarbon compounds which are in the form of a liquid at an ambient temperature with a boiling point of about 50 to 200°C, of which one or more compounds selected from hexane, heptane, octane, ethylcyclohexane, a mineral oil,

toluene, xylene, and ethylbenzene, with one or more compounds selected from hexane, heptane, ethylcyclohexane, and toluene being particularly preferable.

In the solid catalyst component for polymerization of an olefin according to the present invention, magnesium, titanium, halogen, and the succinic acid diester compound can be contained in desired amounts respectively as long as the content of the succinic acid diester compound described above and the molar ratio represented by a content (molar amount) of the succinic acid diester compound/a content (molar amount) of titanium described above satisfy the above requirements.

The solid catalyst component for polymerization of an olefin according to the present invention comprises titanium, in terms of the atomic weight, in preferably 1.0 to 6.0% by mass, more preferably 2.0 to 5.0% by mass, and further preferably 2.5 to 4.5% by mass.

The solid catalyst component for polymerization of an olefin according to the present invention comprises magnesium, in terms of the atomic weight, in preferably 15.0 to 25.0% by mass, more preferably 16.0 to 23.0% by mass, further preferably 17.0 to 22.0% by mass, and much more preferably 18.0 to 21.0% by mass.

The solid catalyst component for polymerization of an olefin according to the present invention comprises halogen, in terms of the atomic weight, in preferably 50.0 to 70.0% by mass, more preferably 55.0 to 68.0% by mass, further preferably 58.0 to 67.0% by mass, and much more preferably 60.0 to 66.0% by mass.

In the present application document, the content rate of titanium in the solid catalyst component for polymerization of an olefin means the value measured in conformity with the method (oxidation-reduction titration) described in JIS 8311-1997 "Method for determination of titanium in titanium ores".

Further, in the present application document, the content percentage of magnesium in the solid catalyst component for polymerization of an olefin means the value measured by the EDTA titration method in which the solid catalyst component for polymerization of an olefin is dissolved in a hydrochloric acid solution and titrated with an EDTA solution.

Additionally, in the present application document, the content of halogen in the solid catalyst component for polymerization of an olefin means the value measured by the silver nitrate titration in which the solid catalyst component is treated in a mixed solution of sulfuric acid and pure water to form an aqueous solution, then a predetermined amount of which is separated to titrate halogen with a silver nitrate standard solution.

Further, in the present application document, the content ratio of the succinic acid diester compound and the content ratio of other internal electron-donating compounds added as needed in the solid catalyst component for polymerization of an olefin mean the values obtained by hydrolyzing the solid catalyst component for polymerization of an olefin, then extracting the succinic acid diester compound and other internal electron-donating compounds added as needed using an aromatic solvent, and measuring this solution by the gas chromatography FID (Flame Ionization Detector) method.

The solid catalyst component for polymerization of an olefin according to the present invention has the total pore volume of a diameter of 1 μm or less of, when measured by the mercury intrusion method, 0.3 to 1.0 $cm^3/g$, preferably 0.3 to 0.8 $cm^3/g$, and more preferably 0.3 to 0.6 $cm^3/g$.

The solid catalyst component for polymerization of an olefin according to the present invention has the total pore volume of a diameter of 1 μm or less measured by the mercury intrusion method of within the above range. For this reason, the solid catalyst component, when used for block polymerizing olefins, can sufficiently retain rubber components in particles and easily produce a block copolymer with excellent flowability.

In the present application document, the total pore volume of a diameter of 1 μm or less measured by the mercury intrusion method means the value measured by the mercury intrusion method using a mercury intrusion porosimeter (a product of Micromeritics, Autopore III9420).

The solid catalyst component for polymerization of an olefin according to the present invention has the specific surface area of 200 $m^2/g$ or more, preferably 300 to 500 $m^2/g$ or more, and more preferably 350 to 500 $m^2/g$ or more.

When the solid catalyst component for polymerization of an olefin according to the present invention has a specific surface area of 200 $m^2/g$ or more, an olefin enters pores formed on the surface of the solid catalyst component and are then subjected to the polymerization reaction in the pores when such a component is used for polymerizing an olefin, particularly copolymerizing olefins. For this reason, a polymer of an olefin can be prepared under high polymerization activity, and the polymerization reaction can be performed easily under high operability while inhibiting the stickiness on the surface of the solid catalyst component associated with the formation of a copolymer.

In the present application document, the specific surface area of the solid catalyst component for polymerization of an olefin means the value automatically measured by the BET method using a specific surface area analyzer (a product of QUANTA CHROME, QUANTA SORBQS-17).

The solid catalyst component for polymerization of an olefin according to the present invention can be preferably produced by the method for producing a solid catalyst component for polymerization of an olefin according to the present inventio to be described later.

The present invention can accordingly provide the solid catalyst component for polymerization of an olefin

comprising an internal electron-donating compound other than phthalate esters, capable of easily producing the polymer of an olefin with an excellent melt flow rate and high rigidity, and further capable of easily producing the copolymer having a practically sufficient block rate and a flowability (less stickiness) under excellent copolymerization activity.

Next, the method for producing a solid catalyst component for polymerization of an olefin according to the present invention will be described.

The method for producing a solid catalyst component for polymerization of an olefin according to the present invention is;

a method for producing a solid catalyst component for polymerization of an olefin by allowing dialkoxy magnesium, a titanium halogen compound and a succinic acid diester compound to mutually contact,
wherein the titanium halogen compound is allowed to contact the dialkoxy magnesium multiple times, of which when the titanium halogen halogen compound is allowed to contact the dialkoxy magnesium for the first time, 1.5 to 10.0 mol of the titanium halogen compound per mol of the dialkoxy magnesium is used,
wherein the total amount of the titanium compound used per mol of the dialkoxy magnesium is 5.0 to 18.0 mol, and an amount of the succinic acid diester compound used per mol of the dialkoxy magnesium is 0.10 to 0.20 mol.

In the method for producing a solid catalyst component for polymerization of an olefin according to the present invention, when the titanium halogen compound is allowed to contact dialkoxy magnesium multiple times, of which when the titanium halogen halogen compound is allowed to contact dialkoxy magnesium for the first time, 1.5 to 10.0 mol of the titanium halogen compound per mol of dialkoxy magnesium is used, 2.0 to 8.0 mol of the titanium halogen compound per mol of dialkoxy magnesium is preferably used, and 2.0 to 5.0 mol of the titanium halogen compound per mol of dialkoxy magnesium is more preferably used.

In the method for producing a solid catalyst component for polymerization of an olefin according to the present invention, when the amount of the titanium halogen compound used to dialkoxy magnesium is controlled within the above range, a solid catalyst component for polymerization of an olefin achieving high activity can be prepared with a small amount of the titanium halogen compound.

In the method for producing a solid catalyst component for polymerization of an olefin according to the present invention, the total amount of the titanium compound used is 5.0 to 18.0 mol per mol of dialkoxy magnesium, preferably 5.0 to 15.0 mol per mol of dialkoxy magnesium, and more preferably 5.0 to 12.0 mol per mol of dialkoxy magnesium.

In the method for producing a solid catalyst component for polymerization of an olefin according to the present invention, when the total amount of the titanium compound used per mol of dialkoxy magnesium is controlled within the above range, a solid catalyst component for polymerization of an olefin achieving high activity can be prepared with a small amount of the titanium halogen compound.

In the method for producing a solid catalyst component for polymerization of an olefin according to the present invention, 0.10 to 0.20 mol of the succinic acid diester compound per mol of dialkoxy magnesium is used, 0.10 to 0.18 mol of the succinic acid diester compound per mol of dialkoxy magnesium is preferably used, and 0.10 to 0.15 mol of the succinic acid diester compound per mol of dialkoxy magnesium is more preferably used.

In the method for producing a solid catalyst component for polymerization of an olefin according to the present invention, when the amount of the succinic acid diester compound used per mol of dialkoxy magnesium is controlled within the above range, the succinic acid diester compound is sufficiently supported, while inhibiting excess support of the titanium halogen compound on the carrier.

Examples of the method for producing a solid catalyst component for polymerization of an olefin according to the present invention include, more specifically, a method in which dialkoxy magnesium, the titanium halogen compound and the succinic acid diester compound are suspended in an inert hydrocarbon solvent and allowed to contact while heating for a predetermined time, and then the titanium halogen compound is further added to the obtained suspension and allowed to contact while heating to obtain a solid product, and the solid product is washed with a hydrocarbon solvent thereby to obtain the intended solid catalyst component for polymerization of an olefin.

The above inert organic solvent is preferably in the form of a liquid at an ambient temperature (20°C) with a boiling point of 50 to 150°C, and more preferably an aromatic hydrocarbon compound or a saturated hydrocarbon compound which is in the form of a liquid at an ambient temperature with a boiling point of 50 to 150°C.

Examples of the above inert organic solvent specifically include one or more solvents selected from straight chain aliphatic hydrocarbon compounds such as hexane, heptane, and decane, branched chain aliphatic hydrocarbon compounds such as methylheptane, alicyclic hydrocarbon compounds such as cyclohexane, methylcyclohexane, and ethylcyclohexane, and aromatic hydrocarbon compounds such as toluene, xylene, and ethylbenzene.

Of the above inert organic solvents, aromatic hydrocarbon compounds which are in the form of a liquid at an ambient temperature with a boiling point of 50 to 150°C are preferable because the activity of the solid catalyst component to be obtained is enhanced and the tacticity of a polymer to be obtained can be enhanced.

The above heating temperature is preferably 70 to 150°C, more preferably 80 to 120°C, and further preferably 90

to 110°C.

The above heating time is preferably 30 to 240 minutes, more preferably 60 to 180 minutes, and further preferably 60 to 120 minutes.

The number of times the titanium halogen compound is added to the above suspension is not particularly limited.

When the titanium halogen compound is added multiple times to the above suspension, heating temperature at each time addition may be adjusted to be within the above range, and heating time at each addition may be adjusted to be within the above range.

In the above preparation method, other internal electron-donating compounds may be used in combination with the succinic acid diester compound. Further, the above contact may also be carried out in the copresence of other reaction reagents such as silicon, phosphorus, and aluminum, and surfactants.

In the production method of the present invention, preferable aspects of the solid catalyst component for polymerization of an olefin to be obtained are as described in detail in the solid catalyst component for polymerization of an olefin according to the present invention.

The present invention can accordingly provide the method for producing a solid catalyst component for polymerization of an olefin comprising an internal electron-donating compound other than phthalate esters, capable of easily producing a polymer of an olefin with an excellent melt flow rate and high rigidity, and further capable of easily producing a copolymer having a practically sufficient block rate and flowability (less stickiness) under excellent copolymerization activity.

Next, the catalyst for polymerization of an olefin according to the present invention will be described.

The catalyst for polymerization of an olefin according to the present invention comprises:

(I) the solid catalyst component for polymerization of an olefin according to the present invention, and
(II) an organoaluminum compound represented by the following formula (2):

$$R^5{}_pAlQ_{3-p} \qquad (2)$$

wherein $R^5$ is an alkyl group having 1 to 6 carbon atoms, Q is a hydrogen atom or halogen, and p satisfies $0 < p \leq 3$, wherein when more than one $R^5$ are present, each $R^5$ may be the same as or different from each other, and when more than one Q are present, each Q may be the same or different.

The catalyst for polymerization of an olefin according to the present invention preferably comprises:

(I) the solid catalyst component for polymerization of an olefin according to the present invention,
(II) an organoaluminum compound represented by the following formula (2):

$$R^5{}_pAlQ_{3-p} \qquad (2)$$

wherein $R^5$ is an alkyl group having 1 to 6 carbon atoms, Q is a hydrogen atom or halogen atom, and p satisfies $0 < p \leq 3$, wherein when more than one $R^5$ are present, each $R^5$ may be the same as or different from each other, and when more than one Q are present, each Q may be the same or different, and
(III) an external electron-donating compound.

Details of (I) the solid catalyst component for polymerization of an olefin according to the present invention composing the catalyst for polymerization of an olefin according to the present invention are as described above.

In the catalyst for polymerization of an olefin according to the present invention, (II) the organoaluminum compound is represented by the following formula (2):

$$R^5{}_pAlQ_{3-p} \qquad (2)$$

wherein $R^5$ is an alkyl group having 1 to 6 carbon atoms, Q is a hydrogen atom or halogen atom, and p satisfies $0 < p \leq 3$, wherein when more than one $R^5$ are present, each $R^5$ may be the same as or different from each other, and when more than one Q are present, each Q may be the same or different.

In the compound represented by the following formula (2), p satisfies $0 < p \leq 3$ and, specifically, p is 1, 2 or 3.

Specific examples of such (II) the organoaluminum compound include one or more compounds selected from trialkyl aluminum such as triethylaluminum, triisopropyl aluminum, tri-n-butylaluminum, tri-n-hexylaluminum, and triisobutylaluminum, halogenated alkyl aluminum such as diethylaluminum chloride, and diethylaluminum bromide, and diethylaluminum halide, preferably one or more compounds selected from halogenated alkyl aluminum such as diethylaluminum chloride, and trialkyl aluminum such as triethylaluminum, tri-n-butylaluminum, and triisobutylaluminum,

and more preferably one or more compounds selected from triethylaluminum and triisobutylaluminum.

Examples of (III) the external electron-donating compound composing the catalyst for polymerization of an olefin of the present invention include compounds represented by the following formula (4)

$$R^7_rSi(NR^8R^9)_s(OR^{10})_{4-(r+s)} \qquad (4)$$

wherein, r is 0 or 1 to 2, s is 0 or 1 to 2, r + s is 0 or 1 to 4, $R^7$, $R^8$ or $R^9$ is a hydrogen atom or an any of the groups selected from a straight chain or a branched chain alkyl group having 1 to 12 carbon atoms, a substituted or unsubstituted cycloalkyl group, a phenyl group, an allyl group, and an aralkyl group, may contain a heteroatom, and may be the same as or different from each other. $R^8$ and $R^9$ may bond to form a ring, $R^7$, $R^8$ and $R^9$ may be the same or different. $R^{10}$ is an any of the groups selected from an alkyl group having 1 to 4 carbon atoms, a cycloalkyl group, a phenyl group, a vinyl group, an allyl group, and an aralkyl group, and may contain a heteroatom.

In the compound represented by the following formula (4), $R^7$ is a hydrogen atom or an any of the groups selected from a straight chain or a branched chain alkyl group having 1 to 12 carbon atoms, a substituted or unsubstituted cycloalkyl group, a phenyl group, an allyl group, and an aralkyl group, and may contain a heteroatom.

$R^7$ is preferably a straight chain or a branched chain alkyl group having 1 to 10 carbon atoms or a cycloalkyl group having 5 to 8 carbon atoms, and particularly preferably a straight chain or a branched chain alkyl group having 1 to 8 carbon atoms or a cycloalkyl group having 5 to 8 carbon atoms.

In the compound represented by the following formula (4), $R^8$ or $R^9$ is a hydrogen atom or an any of the groups selected from a straight chain or a branched chain alkyl group having 1 to 12 carbon atoms, a substituted or unsubstituted cycloalkyl group, a phenyl group, an allyl group, and an aralkyl group, and may contain a heteroatom.

$R^8$ or $R^9$ is preferably a straight chain or a branched chain alkyl group having 1 to 10 carbon atoms or a cycloalkyl group having 5 to 8 carbon atoms, and particularly preferably a straight chain or a branched chain alkyl group having 1 to 8 carbon atoms or a cycloalkyl group having 5 to 8 carbon atoms.

$R^8$ and $R^9$ may bond to form a ring, and in such a case ($NR^8R^9$) forming a ring is preferably a perhydroquinolino group and a perhydroisoquinolino group.

In the compound represented by the following formula (4), $R^7$, $R^8$ and $R^9$ are the same or different.

In the compound represented by the following formula (4), $R^{10}$ is an any of the groups selected from an alkyl group having 1 to 4 carbon atoms, a cycloalkyl group, a phenyl group, an allyl group, and an aralkyl group, and may contain a heteroatom.

$R^{10}$ is preferably a straight chain or a branched chain alkyl group having 1 to 4 carbon atoms.

In the compound represented by the following formula (4), r is 0 or 1 to 2, and specifically, r is 0, 1 or 2.

In the compound represented by the following formula (4), s is 0 or 1 to 2, and specifically, s is 0, 1 or 2.

In the compound represented by the following formula (4), r + s is 0 or 1 to 4, and specifically, r + s is 0, 1, 2, 3 or 4.

Examples of the compounds represented by the above formula (4) specifically include one or more organosilicon compounds selected from phenyl alkoxysilane, alkyl alkoxysilane, phenylalkyl alkoxysilane, cycloalkyl alkoxysilane, cycloalkylalkyl alkoxysilane, (alkylamino)alkoxysilane, alkyl(alkylamino)alkoxysilane, alkyl(alkylamino)silane, and alkylaminosilane.

Examples of the compounds represented by the above formula (4) wherein s is 0 particularly preferably include one or more organosilicon compounds selected from di-n-propyl dimethoxysilane, diisopropyl dimethoxysilane, di-n-butyl dimethoxysilane, diisobutyl dimethoxysilane, di-t-butyl dimethoxysilane, t-butyl methyl dimethoxysilane, t-butyl ethyl dimethoxysilane, di-n-butyl diethoxysilane, t-butyl trimethoxysilane, t-butyl triethoxysilane, dicyclohexyl dimethoxysilane, dicyclohexyl diethoxysilane, cyclohexyl methyldimethoxysilane, cyclohexyl methyldiethoxysilane, cyclohexyl ethyldimethoxysilane, cyclohexyl ethyldiethoxysilane, dicyclopentyl dimethoxysilane, dicyclopentyl diethoxysilane, cyclopentyl methyldimethoxysilane, cyclopentyl methyldiethoxysilane, cyclopentyl ethyldiethoxysilane, cyclohexyl cyclopentyl dimethoxysilane, cyclohexyl cyclopentyl diethoxysilane, 3-methylcyclohexyl cyclopentyl dimethoxysilane, 4-methylcyclohexyl cyclopentyl dimethoxysilane, and 3,5-dimethylcyclohexyl cyclopentyl dimethoxysilane.

Examples of the compounds represented by the above formula (4) wherein s is 1 or 2 include one or more organosilicon compounds selected from di(alkylamino)dialkoxysilane, (alkylamino) (cycloalkylamino)dialkoxysilane, (alkylamino) (alkyl)dialkoxysilane, di(cycloalkylamino)dialkoxysilane, vinyl(alkylamino)dialkoxysilane, allyl(alkylamino) dialkoxysilane, (alkoxyamino)trialkoxysilane, (alkylamino)trialkoxysilane, and (cycloalkylamino)trialkoxysilane, examples of such compounds particularly preferably include ethyl(t-butylamino)dimethoxysilane, cyclohexyl(cyclohexylamino) dimethoxysilane, ethyl(t-butylamino)dimethoxysilane, bis(cyclohexylamino)dimethoxysilane, bis(perhydroisoquinolino) dimethoxysilane, bis(perhydroquinolino)dimethoxysilane, ethyl(isoquinolino)dimethoxysilane, diethylamino trimethoxysilane, and diethylamino triethoxysilane, and particularly one or more organosilicon compounds selected from bis(perhydroisoquinolino)dimethoxysilane, diethylaminotrimethoxysilane, and diethylaminotriethoxysilane.

The compounds represented by the above formula (4) may be used in combination of two or more compounds.

The catalyst for polymerization of an olefin according to the present invention comprises (I) the solid catalyst

component for polymerization of an olefin according to the present invention, (II) the organoaluminum compound represented by the formula (2), and (III) the external electron-donating compound, that is, the contact product thereof.

The catalyst for polymerization of an olefin according to the present invention may be produced by allowing (I) the solid catalyst component for polymerization of an olefin according to the present invention, (II) the organoaluminum compound represented by the formula (2), and (III) the external electron-donating compound to contact in the absence of an olefin, or may be produced, as described hereinbelow, by allowing these components to contact in the presence of an olefin (in the polymerization system).

In the catalyst for polymerization of an olefin according to the present invention, the content ratio of each component can be any ratio unless the effects of the present invention are affected, and not particularly limited, but typically, such a catalyst comprises preferably 1 to 2000 mol, more preferably 50 to 1000 mol, of (II) the organoaluminum compound per mol of the titanium atom in (I) the solid catalyst component for polymerization of an olefin. Additionally, the catalyst for polymerization of an olefin according to the present invention comprises preferably 0.002 to 10.000 mol, more preferably 0.010 to 2.000 mol, further preferably 0.010 to 0.500 mol, of (III) the external electron-donating compound per mol of (II) the organoaluminum compound.

The present invention can accordingly provide the catalyst for polymerization of an olefin comprising an internal electron-donating compound other than phthalate esters, capable of easily producing a polymer of an olefin with an excellent melt flow rate and high rigidity, and further capable of easily producing a copolymer having a practically sufficient block rate and flowability (less stickiness) under excellent copolymerization activity.

Next, the method for producing a polymer of an olefin according to the present invention will be described.

The method for producing a polymer of an olefin according to the present invention comprises polymerizing an olefin in the presence of the catalyst for polymerization of an olefin according to the present invention.

In the method for producing a polymer of an olefin according to the present invention, the polymerization of olefins may be homopolymerization, or copolymerization.

In the method for producing a polymer of an olefin according to the present invention, examples of olefins to be polymerized include one or more olefins selected from ethylene, propylene, 1-butene, 1-pentane, 4-methyl-1-pentane, and vinylcyclohexane, of which one or more olefins selected from ethylene, propylene, and 1-butene are preferable, with propylene being more preferable.

When the above olefin is propylene, homopolymerization of propylene may be acceptable, but copolymerization with another $\alpha$-olefin may also be acceptable.

Examples of olefins to be copolymerizable with propylene include one or more olefins selected from ethylene, 1-butene, 1-pentane, 4-methyl-1-pentane, and vinylcyclohexane.

When the catalyst for polymerization of an olefin according to the present invention is prepared in the presence of olefins (in the polymerization system), the ratio of amounts of each component used can be any ratio unless the effects of the present invention are not affected, and not particularly limited, but typically, preferably 1 to 2000 mol, more preferably 50 to 1000 mol, of (II) the organoaluminum compound described above is allowed to contact per mol of the titanium atom in (I) the solid catalyst component for polymerization of an olefin. Additionally, preferably 0.002 to 10.000 mol, more preferably 0.010 to 2.000 mol, and further preferably 0.010 to 0.500 mol, of (III) the external electron-donating compound described above is allowed to contact per mol of (II) the organoaluminum compound described above.

The contact order of each component composing the above catalyst for polymerization of an olefin can be any order, but it is desirable that (II) the organoaluminum compound is first charged in the polymerization system, subsequently (III) the external electron-donating compound is charged and allowed to contact, and then (I) the solid catalyst component for polymerization of an olefin described above is charged and allowed to contact.

The method for producing a polymer of an olefin according to the present invention can be carried out in the presence or absence of an organic solvent.

Olefin monomers such as propylene can be used in the form forms of a gas and a liquid. The polymerization temperature is preferably 200°C or less, and more preferably 100°C or less, and the polymerization pressure is preferably 10 MPa or less, and more preferably 5 MPa or less. The polymerization of olefins can be either the continuous polymerization method or the batch polymerization method. The polymerization reaction can be carried out in single stage, or can be carried out in two or more stages.

In addition, when polymerizing an olefin using the catalyst for polymerization of an olefin according to the present invention (also called the primary polymerization), the preliminary polymerization is preferably carried out prior to the primary polymerization for even more improving the catalytic activity, tacticity, particle properties and the like of a polymer to be formed, and for the preliminary polymerization, the same olefins or monomers such as styrene as used in the primary polymerization can be used.

When performing the preliminary polymerization, the contact order of each component and monomers (olefins) composing the catalyst for polymerization of an olefin can be any order, but preferably, (II) the organoaluminum compound is first charged in the preliminary polymerization system in which an inert gas atmosphere or an olefin gas atmosphere is set, subsequently (I) the solid catalyst component for polymerization of an olefin according to the present invention is

charged and allowed to contact, and then an olefin such as propylene singly, or a mixture of one or more olefins such as propylene and another olefin, is allowed to contact.

In the method for producing a polymer of an olefin according to the present invention, examples of the polymerization method include the slurry polymerization method in which a solvent of an inert hydrocarbon compound such as cyclohexane and heptane is used, the bulk polymerization method in which a solvent such as liquefied propylene is used, and the gas phase polymerization method in which no solvent is substantially used, with the bulk polymerization method and the gas phase polymerization method being preferable.

When the copolymerization of propylene and a monomer of another α-olefin is performed, the representative copolymerization includes the random copolymerization in which the polymerization is carried out in a single stage using propylene and a small amount of ethylene as a comonomer, and the so-called propylene-ethylene block copolymerization in which the homopolymerization of propylene is carried out in the first stage (the first polymerization vessel) and the copolymerization of propylene and another α-olefin such as ethylene is carried out in the second stage (the second polymerization vessel) or in the multistages of more than that (multistage polymerization vessels), with the block copolymerization of propylene and another α-olefin being preferable.

The block copolymer to be obtained by the block copolymerization is the polymer comprising a segment in which 2 or more monomer compositions continuously change, and refers to those in the form wherein 2 or more polymer chains (segments) with different polymer primary structures in a molecular chain are connected such as monomer species, comonomer species, comonomer composition, comonomer content, comonomer sequence, tacticity, and the like.

In the method for producing a polymer of an olefin according to the present invention, the block copolymerization reaction of propylene and another **α-**olefin can be typically carried out, in the presence of the catalyst for polymerization of an olefin according to the present invention, by allowing propylene singly or propylene and a small amount of α-olefin (ethylene or the like) to contact in a former stage, and subsequently allowing propylene and α-olefin (ethylene or the like) to contact in a later stage. The polymerization reaction of the above former stage may be repeatedly carried out multiple times, or the polymerization reaction of the above later stage may be repeatedly carried out multiple times in the multistage reaction.

The block copolymerization reaction of propylene and another α-olefin is specifically carried out preferably by polymerizing at an adjusted polymerization temperature and time so that a percentage of the polypropylene part (in the final copolymer to be obtained) in the former stage is 20 to 90% by mass, and polymerizing by introducing propylene and ethylene or another α-olefin so that the rubber part percentage such as ethylene-propylene rubber (EPR) (in the final copolymer to be obtained) is 10 to 80% by mass in the subsequent later stage.

The polymerization temperature in both former stage and later stage is preferably 200°C or less, more preferably 100°C or less, further preferably 65°C to 80°C, and much more preferably 75 to 80°C, and the polymerization pressure is preferably 10 MPa or less, more preferably 6 MPa or less, and further preferably 5 MPa or less.

The above copolymerization reaction can also employ any of the continuous polymerization method and the batch polymerization method, and the polymerization reaction can be carried out in a single stage, or can be carried out in two or more stages.

Additionally, the polymerization time (residence time in a reactor) is preferably 1 min to 5 hours at respective polymerization stages at the former stage or later stage polymerization, or also at the continuous polymerization.

Examples of the polymerization method include the slurry polymerization method in which a solvent of an inert hydrocarbon compound such as cyclohexane and heptane is used, the bulk polymerization method in which a solvent such as liquefied propylene is used, and the gas phase polymerization method in which no solvent is substantially used, with the bulk polymerization method and the gas phase polymerization method being preferable.

The ethylene·propylene block copolymer contains the EP component (the copolymer component of ethylene and propylene), and the EPR component discharged onto the particle surface of the polymer causes particle stickiness (adhesiveness), thereby resulting in poor flowability. The deterioration of particle flowability in the polymer production facility causes the plant operability to be reduced, whereby it is desired to select a method for producing a polymer that is capable of inhibiting the EPR component from discharging onto the particle surface.

The present invention can accordingly provide the method capable of easily producing the polymer of an olefin with an excellent melt flow rate and high rigidity, and further capable of easily producing a copolymer having a practically sufficient block rate and flowability (less stickiness) under excellent copolymerization activity.

Next, the polymer of an olefin according to the present invention will be described.

The polymer of an olefin according to the present invention has:

(a) a melt flow rate of 0.5 g/10 min to 200.0 g/10 min, and
(b) a flexural modulus of 2,000 MPa or more.

In the polymer of an olefin according to the present invention, the melt flow rate (MFR) indicating the melt flow rate of the polymer of an olefin is 0.5 g/10 min to 200.0 g/10 min.

In the polymer of an olefin according to the present invention, when a melt flow rate (MFR) is in the above range, practically sufficient formability can be easily demonstrated.

In the present application document, the melt flow rate (MFR) means the value measured in conformity with ASTM D 1238, JIS K 7210.

The polymer of an olefin according to the present invention has a flexural modulus (FM) of 2,000 MPa or more, preferably 2,000 to 2,500 MPa, and more preferably 2,100 to 2,400 MPa.

In the polymer of an olefin according to the present invention, when a flexural modulus (FM) is within the above range, excellent rigidity can be easily demonstrated.

In the present application document, the flexural modulus (FM) of the polymer of an olefin means the value (unit is MPa) measured at a measurement atmosphere temperature of 23°C in conformity with JIS K7171, using an injection molding test piece having a thickness of 4.0 mm, a width of 10.0 mm, and a length of 80.0 mm and created using NEX30III3EG, a product of NISSEI PLASTIC INDUSTRIAL CO., LTD., under the conditions at a molding temperature of 200°C and a mold temperature of 40°C.

The polymer of an olefin according to the present invention satisfying the requirements of the above melt flow rate and the flexural modulus has practically sufficient flowability, thereby having excellent moldability and easily demonstrating excellent rigidity.

The polymer of an olefin according to the present invention, when molded to an injection molded plate, has a percentage of the oriented layers at the cross section of the injection molded plate of preferably 20% or more, more preferably 20 to 50%, and further preferably 25 to 40%.

The polymer of an olefin according to the present invention, when molded to an injection molded plate, has a percentage of the oriented layers at the cross section of the injection molded plate satisfying the above requirements. For this reason, the plate with thicker oriented layers and an excellent flexural modulus can be easily provided.

In the present application document, the percentage of the oriented layers at the cross section of an injection molded plate made of the polymer of an olefin means the value measured by the following methods.

1. Formation of a molded product

Injection molding of the polymer of an olefin is carried out under the following conditions in conformity with JIS K 7152-1 and JIS K 6921-2 thereby to obtain a molded product having the external shape shown in Figure 1.

Apparatus: NEX-III-3EG, a product of NISSEI PLASTIC INDUSTRIAL CO., LTD.
Type of test piece: Multipurpose test piece type A1 described in JIS K 7139
Melting temperature of resin: 200°C
Mold temperature: 40°C
Injection velocity: 180 mm/sec
Dwelling pressure: 50 MPa-40 sec

2. Creation of a measurement specimen (Thin specimen for polarized optical microscope observation)

(1) As shown in Figure 1, the obtained molded product is cut in a direction perpendicular to the resin machine direction MD at a position c1, which is located at a distance of about 2 cm from a gate G in the resin machine direction MD, thereby to obtain a cut product S1 shown in Figure 2(a).
(2) As shown in Figure 2(a), the cut product S1 obtained in (1) is cut at the center part (location c2) parallel to the resin machine direction MD to obtain a cut product S2 shown in Figure 2(b).
(3) As shown in Figure 2(b), the cut product S2 is cut out at a location c3 using a rotary microtome (a product of YAMATO KOHKI INDUSTRIAL CO., LTD., RX-860) parallel to the resin machine direction MD to a thickness of 30 μm to obtain a thin measurement specimen S3 shown in Figure 2(c).
(4) Figure 2(d) is schematic drawings showing the obtained thin measurement specimen S3, the drawing on the left of Figure 2(d) is a side view of the thin measurement specimen S3 corresponding to Figure 2(c), and the drawing on the right of figure 2(d) is a front view of the thin measurement specimen S4.

3. Polarized optical microscope observation

Figure 3 is an enlarged front view of the thin measurement specimen S3 shown on the right of Figure 2(d). The above measurement specimen S3 is observed using a polarized optical microscope (a product of NIKON Corporation, EPCLIPSE LV-100NDA) to specify a core layer c and oriented layers h1, h2. When the thickness of the core layer is Tc, the

thickness of the oriented layers is Th1, Th2, the percentage F (%) of the oriented layers in the thickness of the molded layer is calculated based on the following equation (5).

$$F\ (\%) = \{(Th1 + Th2)/(Th1 + Tc + Th2)\} \times 100 \quad (5)$$

The thickness of the core layer Tc, and the thickness of the oriented layers Th1, Th2 employ each arithmetic average value when the thickness of the core layer c and the thickness of the oriented layers h1, h2 at any 10 points are measured.

In the case of the polymer of an olefin according to the present invention being a crystalline polymer, when the polymer melted for injection molding is poured into a mold, the polymer is poured into the mold under a high shear stress and cooled. For this reason, oriented crystallization is caused near the surface of the injection molded product to be obtained. When this injection molded product is thinly cut out using a microtome or the like and the cross section is observed under a polarized optical microscope, the oriented layers with high birefringence formed close to the surface and the core layer at the inner part can be confirmed in a clearly distinguishable state, thereby easily specifying the thickness of the above core layer Tc and the thickness of the oriented layers Th1, Th2.

The polymer of an olefin according to the present invention is preferably formed of a propylene polymer,

wherein, when the polymer of an olefin is measured by cross fractionation chromatography at a measuring temperature of 40 to 140°C,
a percentage of the total amount of a polymer of an olefin eluting at a measuring temperature of 120°C or more in the total amount of the polymer of an olefin to be measured is 20% by mass or more, and
a content percentage of the polymer of an olefin having a molecular weight of 1,000,000 or more in the total amount of the polymer of an olefin eluting at a measuring temperature of 120°C or more is 3% by mass or more.

At the measurement of the cross fractionation chromatography, the percentage of the total amount of the polymer of an olefin eluting at a measuring temperature of 120°C or more in the total amount of the polymer of an olefin to be measured is preferably 20 to 60% by mass, and more preferably 25 to 50% by mass.

At the measurement of the cross fractionation chromatography, the content percentage of the polymer of an olefin having a molecular weight of 1,000,000 or more in the total amount of the polymer of an olefin eluting at a measuring temperature of 120°C or more is preferably 3 to 10% by mass, and more preferably 3 to 6% by mass.

The above propylene polymer may be a homopolymer of propylene, or may be a copolymer of propylene and other monomers.

In the determination of the relation between the elution amount and the elution temperature of the polymer as the crystallinity analysis of the propylene polymer, a selective elevation of the elution amount at a measuring temperature of 120°C or more (120°C to 140°C) is confirmed (a peak is detected). The above propylene polymer eluting at a temperature of 120°C or more is considered a highly tactic polymer compared with a polymer eluting at a temperature less than 120°C and presumably affects the tacticity and mechanical properties (particularly rigidity) of the propylene polymer.

When the polymer of an olefin according to the present invention has, at the measurement of cross fractionation chromatography, the percentage of the total amount of the polymer of an olefin eluting at a measuring temperature of 120°C or more in the total amount of the polymer of an olefin to be measured, and a content percentage of the polymer of an olefin having a molecular weight of 1,000,000 or more in the total amount of the polymer of an olefin eluting at a measuring temperature of 120°C or more satisfying the above requirements, a propylene polymer having high tacticity, excellent crystallinity due to the sufficient presence of polymer chains, and enhanced rigidity can be provided.

In the present application document, measurement conditions of the cross fractionation chromatography are as follows.

<Elution percentage of the polymer at a high temperature (CFC)>

The elution amount by the molecular weight of the polymer at a high temperature was measured under the following conditions by the cross fractionation chromatography (CFC) (a product of Polymer Char) to determine a percentage of the total amount of the polymer of an olefin eluting at 120°C or more in the total amount of the polymer of an olefin (the percentage of an insoluble o-dichlorobenzene amount at a measuring temperature of 120°C or more in the total amount of the polymer), and further to determine a content percentage of the polymer of an olefin having a molecular weight of 1,000,000 or more in the total amount of the polymer of an olefin eluting at 120°C or more.

Solvent: o-Dichlorobenzene (ODCB)
Column: Shodex GPC UT-806M
Sample concentration: 5 g/L-ODCB

Sample volume: 0.5 mL
Pump flow rate: 1.0 mL/min
Crystallization rate: 1.0°C (SEC)/min
Measuring temperature range: 40 to 140°C (SEC)
Flow rate: 1.0 mL/min
Measuring range: 40°C to 140°C

The polymer of an olefin according to the present invention has a molecular weight distribution represented by Mw/Mn, which is the ratio of a mass average molecular weight Mw to a number average molecular weight Mn, of preferably 5.0 to 20.0, more preferably 6.0 to 15.0, and further preferably 7.0 to 13.0.

Further, the polymer of an olefin according to the present invention has a molecular weight distribution represented by Mz/Mw, which is the ratio of a Z average molecular weight Mz to a mass average molecular weight Mw, of preferably 3.0 to 20.0, more preferably 3.0 to 15.0, and further preferably 3.5 to 13.0.

The polymer of an olefin according to the present invention can easily demonstrate the broad molecular weight distribution as described above.

In the present application document, the molecular weight distribution of the polymer of an olefin means the value calculated based on the mass average molecular weight Mw, the number average molecular weight Mn, and Z average molecular weight Mz, which are determined by the measurement under the following conditions using a gel permeation chromatography (GPC) (a product of Waters Corporation, GPCV2000).

Solvent: o-Dichlorobenzene (ODCB)
Temperature: 140°C (SEC)
Column: Shodex GPC UT-806M
Sample concentration: 1 g/liter-ODCB (50 mg/50 mL-ODCB)
Injection volume: 0.5 mL
Flow rate: 1.0 mL/min

The polymer of an olefin according to the present invention can be easily produced by the method for producing a polymer of an olefin according to the present invention.

According to the present invention, the polymer of an olefin with an excellent melt flow rate and high rigidity can be provided.

[Examples]

Next, the present invention will be further described specifically in reference to examples, but these are simply examples and do not intend to limit the present invention.

(Example 1)

1. Synthesis of a solid catalyst component

Diethyl diisopropylsuccinate (succinic acid), which is a succinic acid diester compound, was employed as the internal electron-donating compound, and a solid catalyst component for polymerization of an olefin was prepared by the following method.

(i) A flask having an internal volume of 500 mL, equipped with a stirrer and purged with a nitrogen gas was charged with 20 g (174.8 mmol) of diethoxy magnesium and 110.0 mL of toluene to form a suspension.
(ii) Subsequently, 40.0 mL (365 mmol) of titanium tetrachloride was added to obtain an initial contact product containing solution.
(iii) The temperature of the above initial contact product containing solution was raised, 6.0 mL (22.3 mmol) of diethyl diisopropylsuccinate was added at 90°C while raising the temperature, and the temperature was further raised to 100°C to continue the reaction for 90 minutes while maintaining the same temperature. After completing the reaction, the supernatant was removed, the first contact product, which is the reaction product, was washed 4 times with 105 mL of toluene at 90°C.
(iv) Then, 60 mL (547 mmol) of titanium tetrachloride was added to the above first contact product, the temperature was raised to 115°C to continue the reaction for 60 minutes. After completing the reaction, the operation of removing the supernatant was carried out, and the second contact product, which is the reaction product, was washed twice with 105 mL of toluene at 90°C thereby to obtain the final contact product.

Subsequently, the obtained final contact product was washed 6 times with 100 mL of n-heptane at 40°C, the solid and liquid were separated thereby to obtain the solid catalyst component (the solid catalyst component for polymerization of an olefin).

The solid and liquid of the obtained solid catalyst component were separated, and the titanium content and the content of the succinic acid diester compound in the obtained solid content were measured and found to be 4.2% by mass and 19.0% by mass, respectively. Additionally, the ratio represented by a content of the succinic acid diester compound/a content of titanium was 0.84 in a molar ratio.

Table 1 shows the properties of the obtained solid catalyst components.

The titanium content, content of diisopropyl succinate equivalent to the succinic acid diester compound which is the internal electron-donating compound in the solid catalyst component, and physical properties were measured by the following methods.

<Titanium content in the solid catalyst component>

The titanium content in the solid catalyst component was measured in conformity with the method of JIS 8311-1997.

<Internal electron-donating compound content>

The content of the internal electron-donating compound was determined by the measurement under the following conditions using a gas chromatography (a product of SHIMADZU CORPORATION, GC-14B). The number of moles of the internal electron-donating compound was determined from the gas chromatography measurement result using a calibration curve measured at a known concentration in advance.

(Measurement condition)

- Column: Packed column (ϕ2.6 × 2.1 m, Silicone SE-30 10%, Chromosorb WAW DMCS 80/100, a product of GL Sciences Inc.)
- Detector: FID (Flame Ionization Detector)
- Carrier gas: Helium, flow rate 40 mL/min
- Measuring temperatures: Vaporization chamber 280°C, column 225°C, detector 280°C

<Total pore volume of a diameter of 1 μm or less in the solid catalyst component>

The total pore volume of a diameter of 1 μm or less in the solid catalyst component was determined by the mercury intrusion method using a mercury intrusion porosimeter (a product of Micromeritics, Autopore III9420).

<Specific surface area of the solid catalyst component>

The specific surface area of the solid catalyst component was determined by automatically measuring a specimen, 0.05 to 0.10 g of which is filled in a sample cell, using a specific surface area analyzer (a product of QUANTA CHROME, QUANTA SORBQS-17).

2. Formation of a polymerization catalyst and polymerization reaction

An autoclave equipped with a stirrer having an internal volume of 2.0 L and purged with a nitrogen gas was charged with 1.32 mmol of triethylaluminum, 0.131 mmol of diisopropyl dimethoxysilane (DIPDMSi), and 0.00264 mmol, in terms of the titanium atom, of the above solid catalyst component to form a catalyst for polymerization. Subsequently, the autoclave was charged with 6.0 L of a hydrogen gas and 1.4 L of liquefied propylene, the preliminary polymerization was carried out at 20°C for 5 minutes, followed by raising the temperature to carry out the polymerization reaction at 70°C for 1 hour.

During this operation, the following methods were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, molecular weight distribution (Mw/Mn and Mz/Mw) of the polymer, and the elution percentage of the polymer at a high temperature (CFC). The results are shown in Table 2.

<Polymerization activity per g of the solid catalyst component>

The polymerization activity per g of the solid catalyst component was determined by the following equation (6).

Polymerization activity (g/g-cat) = mass of polymer (g)/mass of solid catalyst component (g) (6)

<Melt flow rate (MFR) of the polymer>

The melt flow rate (MFR) (g/10 min) indicating a melt flow rate of the polymer was measured in conformity with ASTM D 1238 and JIS K 7210.

<Percentage of p-xylene soluble content (XS) of the polymer>

A flask equipped with a stirrer was charged with 4.0 g of the polymer (polypropylene) and 200 mL of p-xylene. Subsequently, an external temperature was set to about 150°C, and the stirring was continued for 2 hours while refluxing p-xylene (a boiling point 137 to 138°C) in the flask to dissolve the above polymer. Then, the solution was cooled over a period of 1 hour until the solution temperature reached 23°C, and the insoluble components and soluble components were filtered and separated. The solution of the above soluble components was collected, p-xylene was distilled off by drying under heating and reduced pressure, and a weight of the obtained residue was determined to calculate a relative percentage (% by mass) in the formed polymer (polypropylene), which was defined as the xylene soluble content (XS).

<Flexural modulus (FM) of the polymer>

Using an injection molding test piece having a thickness of 4.0 mm, a width of 10.0 mm, and a length of 80 mm and manufactured using a product of NISSEI PLASTIC INDUSTRIAL CO., LTD., NEX30III3EG, under the conditions at a molding temperature of 200°C and a mold temperature of 40°C, the flexural modulus was measured at a measurement ambient temperature of 23°C in conformity with JIS K7171.

<Percentage of the oriented layers at the cross section of the injection molded plate formed of the polymer>

1. Formation of a molded product

Injection molding of the polymer of an olefin under the following condition was carried out in conformity with JIS K 7152-1 and JIS K 6921-2 thereby to obtain a molded product having the external shape shown in Figure 1.

Apparatus: NEX-III-3EG, a product of NISSEI PLASTIC INDUSTRIAL CO., LTD.
Type of test piece: Multipurpose test piece type A1 described in JIS K 7139
Melting temperature of resin: 200°C
Mold temperature: 40°C
Injection velocity: 180 mm/sec
Dwelling pressure: 50 MPa-40 sec

2. Creation of measurement specimen (Thin specimen for polarized optical microscope observation)

(1) As shown in Figure 1, the obtained molded product was cut in a direction perpendicular to the resin machine direction MD at a position c1, which is located at a distance of about 2 cm from a gate G in the resin machine direction MD, thereby to obtain a cut product S1 shown in Figure 2(a).
(2) As shown in Figure 2(a), the cut product S1 obtained in (1) was cut at the center part (location c2) parallel to the resin machine direction MD to obtain a cut product S2 shown in Figure 2(b).
(3) As shown in Figure 2(b), the cut product S2 was cut out at a location c3 using a rotary microtome (a product of YAMATO KOHKI INDUSTRIAL CO., LTD., RX-860) parallel to the resin machine direction MD to a thickness of 30 $\mu$m to obtain a thin measurement specimen S3 shown in Figure 2(c).
(4) Figure 2(d) is schematic drawings showing the obtained thin measurement specimen S3, the drawing on the left of Figure 2(d) is a side view of the thin measurement specimen S3 corresponding to Figure 2(c), and the drawing on the right of figure 2(d) is a front view of the thin measurement specimen S4.

3. Polarized optical microscope observation

Figure 3 is an enlarged front view of the thin measurement specimen S3 shown on the right of Figure 2(d). The above measurement specimen S3 was observed using a polarized optical microscope (a product of NIKON Corporation, EPCLIPSE LV-100NDA) to specify a core layer c and oriented layers h1, h2. When the thickness of the core layer is Tc, the thickness of the oriented layers is Th1, Th2, the percentage F (%) of the oriented layers in the thickness of the molded layer was calculated based on the following equation (5).

$$F\ (\%) = \{(Th1 + Th2)/(Th1 + Tc + Th2)\} \times 100 \quad (5)$$

The thickness of the core layer Tc, and the thickness of the oriented layers Th1, Th2 employ each arithmetic average value when the thickness of the core layer c and the thickness of the oriented layers h1, h2 at any 10 spots of the measurement specimen S3 were measured.

<Molecular weight distribution of the polymer>

The molecular weight distribution of the polymer was evaluated by the ratio of a mass average molecular weight Mw to a number average molecular weight Mn, Mw/Mn, and the ratio of a Z average molecular weight Mz to a mass average molecular weight Mw, Mz/Mw, determined by the measurement under the following conditions using gel permeation chromatography (GPC) (a product of Waters Corporation, GPCV2000).

Solvent: o-Dichlorobenzene (ODCB)
Temperature: 140°C (SEC)
Column: Shodex GPC UT-806M
Sample concentration: 1 g/liter-ODCB (50 mg/50 mL-ODCB)
Injection volume: 0.5 mL
Flow rate: 1.0 mL/min

<Elution percentage of the polymer at a high temperature (CFC)>

The elution amount by the molecular weight of the polymer at a high temperature was measured under the following conditions by the cross fractionation chromatography (CFC) (a product of Polymer Char) to determine a percentage of the total amount of the polymer of an olefin eluting at 120°C or more in the total amount of the polymer of an olefin (the percentage of an insoluble o-dichlorobenzene amount at a measuring temperature of 120°C or more in the total amount of the polymer (% by mass)), and further to determine a content percentage of the polymer of an olefin having a molecular weight of 1,000,000 or more in the total amount of the polymer of an olefin eluting at 120°C or more (elution at 120°C or more and a molecular weight of 1,000,000 or more (% by mass)).

Solvent: o-Dichlorobenzene (ODCB)
Column: Shodex GPC UT-806M
Sample concentration: 5 g/L-ODCB
Sample volume: 0.5 mL
Pump flow rate: 1.0 mL/min
Crystallization rate: 1.0°C (SEC)/min
Measuring temperature range: 40 to 140°C (SEC)
Flow rate: 1.0 mL/min
Measuring range: 40°C to 140°C

(Example 2)

A solid catalyst component was prepared in the same manner as in Example 1, in the exception that, in "1. Synthesis of a solid catalyst component" (iii) of Example 1, the temperature was raised to 100°C and the same temperature was maintained for 90 minutes was changed to the temperature was raised to 110°C and the same temperature was maintained for 90 minutes. The solid and liquid of the obtained solid catalyst component were separated, and the titanium content and the content of the succinic acid diester compound in the obtained solid content were measured and found to be 4.4% by mass and 17.4% by mass, respectively. Additionally, the ratio represented by a content of the succinic acid diester compound/a content of titanium was 0.73 in a molar ratio.
Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, molecular weight distributions (Mw/Mn and Mz/Mw) of the polymer, and the elution percentage of the polymer at a high temperature (CFC). The results are shown in Table 2.

(Example 3)

1. Synthesis of a solid catalyst component

Diethyl diisopropylsuccinate (succinic acid), which is a succinic acid diester compound, was employed as the internal electron-donating compound, and a solid catalyst component for polymerization of an olefin was prepared by the following method.

(i) A flask having an internal volume of 500 mL, equipped with a stirrer and purged with a nitrogen gas was charged with 20 g (174.8 mmol) of diethoxy magnesium and 110.0 mL of toluene to form a suspension.
(ii) Subsequently, 40.0 mL (365 mmol) of titanium tetrachloride was added to obtain an initial contact product containing solution.
(iii) The temperature of the above initial contact product containing solution was raised, 6.0 mL (22.3 mmol) of diethyl diisopropylsuccinate was added at 90°C while raising the temperature, and the temperature was further raised to 100°C to continue the reaction for 90 minutes while maintaining the same temperature. After completing the reaction, the supernatant was removed, the first contact product, which is the reaction product, was washed 4 times with 105 mL of toluene at 90°C.
(iv) Then, 100 mL of toluene and 20 mL (182 mmol) of titanium tetrachloride were added to the above first contact product, the temperature was raised to 100°C to continue the reaction for 15 minutes. After completing the reaction, the operation of removing the supernatant was carried out 3 times, and the final contact product, which is the reaction product, was obtained. Subsequently, the obtained final contact product was washed 6 times with 150 mL of n-heptane at 40°C, and the solid and liquid were separated thereby to obtain the solid catalyst component (the solid catalyst component for polymerization of an olefin). The solid and liquid of the obtained solid catalyst component were separated, and the titanium content and the content of the succinic acid diester compound in the obtained solid content were measured and found to be 4.3% by mass and 19.7% by mass, respectively. Additionally, the ratio represented by a content of the succinic acid diester compound/a content of titanium was 0.85 in a molar ratio.

Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the flexural modulus (FM) of the polymer, the molecular weight distributions (Mw/Mn and Mz/Mw) of the polymer, and the elution percentage of the polymer at a high temperature (CFC). The results are shown in Table 2.

(Example 4)

1. Synthesis of a solid catalyst component

Diethyl diisopropylsuccinate (succinic acid), which is a succinic acid diester compound, was employed as the internal electron-donating compound, and a solid catalyst component for polymerization of an olefin was prepared by the following method.

(i) A flask having an internal volume of 500 mL, equipped with a stirrer and purged with a nitrogen gas was charged with 40 g (365 mmol) of titanium tetrachloride and 50.0 mL of toluene to form a mixed solution.
(ii) Subsequently, a suspension formed by mixing 20.0 mL (174.8 mmol) of diethoxy magnesium, 60 mL of toluene and 3.0 mL (11.2 mmol) of diethyl diisopropylsuccinate was added to the above mixed solution maintained at a solution temperature of -6°C thereby to obtain an initial contact product containing solution.

(iii) The temperature of the above initial contact product containing solution was raised, 3.0 mL (11.2 mmol) of diethyl diisopropylsuccinate was added at 60°C while raising the temperature, and the temperature was further raised to 100°C to continue the reaction for 90 minutes while maintaining the same temperature. After completing the reaction, the supernatant was removed, and the first contact product, which is the reaction product, was washed 4 times with 150 mL of toluene at 90°C.

(iv) Then, 100 mL of toluene and 20 mL (182 mmol) of titanium tetrachloride were added to the above first contact product, the temperature was raised to 100°C to continue the reaction for 15 minutes. After completing the reaction, the operation of removing the supernatant was carried out 3 times, and the final contact product, which is the reaction product, was obtained. Subsequently, the obtained final contact product was washed 6 times with 150 mL of n-heptane at 40°C, the solid and liquid were separated thereby to obtain the solid catalyst component (the solid catalyst component for polymerization of an olefin).

The solid and liquid of the obtained solid catalyst component were separated, and the titanium content and the content of the succinic acid diester compound in the obtained solid content were measured and found to be 3.2% by mass and 17.4% by mass, respectively. Additionally, the ratio represented by a content of the succinic acid diester compound/a content of titanium was 1.01 in a molar ratio.

Table 1 shows the properties of the obtained solid catalyst component.

Subsequently, the formation of a polymerization catalyst and the polymerization were carried out in the same method as in **"2.** Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, the molecular weight distributions (Mw/Mn and Mz/Mw) of the polymer, and the elution percentage of the polymer at a high temperature (CFC). The results are shown in Table 2.

(Example 5)

1. Synthesis of a solid catalyst component

Diethyl diisopropylsuccinate (succinic acid), which is a succinic acid diester compound, and (2-ethoxyethyl)ethyl carbonate (EEECA), which is a carbonate compound, were employed as the internal electron-donating compounds, and a solid catalyst component for polymerization of an olefin was prepared by the following method.

(i) A flask having an internal volume of 500 mL, equipped with a stirrer and purged with a nitrogen gas was charged with 90.0 mL (821 mmol) of titanium tetrachloride to form a mixed solution.

(ii) Subsequently, a suspension formed by mixing 20.0 mL (174.8 mmol) of diethoxy magnesium and 60 mL of toluene was added to the above mixed solution maintained at a solution temperature of -6°C thereby to obtain an initial contact product containing solution.

(iii) The temperature of the above initial contact product containing solution was raised, 6.02 mL (22.4 mmol) of diethyl diisopropylsuccinate was added at 60°C while raising the temperature, 2.48 mL (15.4 mmol) of (2-ethoxyethyl)ethyl carbonate was added at 80°C while raising the temperature, and the temperature was further raised to 110°C to continue the reaction for 60 minutes while maintaining the same temperature. After completing the reaction, the supernatant was removed, and the first contact product, which is the reaction product, was washed 4 times with 150 mL of toluene at 90°C.

(iv) Then, 80 mL of toluene and 40 mL (365 mmol) of titanium tetrachloride were added to the above first contact product, the temperature was raised to 100°C to continue the reaction for 15 minutes. After completing the reaction, the operation of removing the supernatant was carried out 4 times, and the final contact product, which is the reaction product, was obtained. Subsequently, the final contact product was washed 6 times with 150 mL of n-heptane at 40°C, and the solid and liquid were separated thereby to obtain the solid catalyst component.

The titanium content and the contents of the succinic acid diester compound and the (2-ethoxyethyl)ethyl carbonate compound in the obtained solid solid catalyst component were measured and found to be 3.2% by mass, 15.0% by mass, and 3.3% by mass, respectively. Additionally, the ratio represented by a content of the succinic acid diester compound/a content of titanium was 0.86 in a molar ratio. Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above

solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, and the molecular weight distributions (Mw/Mn and Mz/Mw) of the polymer. The results are shown in Table 2.

(Example 6)

A solid catalyst component was prepared in the same manner as in Example 2, in the exception that, in "1. Synthesis of a solid catalyst component" (iv) of Example 5, 80 ml of toluene was changed to 100 mL, and 40 mL (365 mmol) of titanium tetrachloride was changed to 20 mL (182 mmol) .

The titanium content and the contents of the succinic acid diester compound and the (2-ethoxyethyl)ethyl carbonate compound in the obtained solid solid catalyst component were measured and found to be 3.2% by mass, 15.2% by mass, and 3.4% by mass, respectively. Additionally, the ratio represented by a content of the succinic acid diester compound/a content of titanium was 0.89 in a molar ratio. Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, and the molecular weight distributions (Mw/Mn and Mz/Mw) of the polymer. The results are shown in Table 2.

(Example 7)

A solid catalyst component was prepared in the same manner as in Example 1, in the exception that, in "1. Synthesis of a solid catalyst component" (ii) of Example 4, 3.0 ml (11.2 mmol) of diethyl diisopropylsuccinate was changed to 3.6 mL (13.4 mmol), and in (iii), 3.0 ml (11.2 mmol) of diethyl diisopropylsuccinate was changed to 3.6 mL (13.4 mmol).

The titanium content and the content of the succinic acid diester compound in the obtained solid solid catalyst component were measured and found to be 3.5% by mass and 21.6% by mass, respectively. Additionally, the ratio represented by a content of the succinic acid diester compound/a content of titanium was 1.15 in a molar ratio. Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used, and 6.0 L of a hydrogen gas was changed to 6.5 L of a hydrogen gas.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, the molecular weight distributions (Mw/Mn and Mz/Mw) of the polymer, and the elution percentage of the polymer at a high temperature (CFC). The results are shown in Table 2.

(Example 8)

The formation of a polymerization catalyst and the polymerization were carried out in the same method as in Example 1, in the exception that the solid catalyst component obtained in Example 4 was used, and in "2. Formation of a polymerization catalyst and polymerization" of Example 4, diisopropyl dimethoxysilane (DIPDMSi) was changed to dicyclopentyl dimethoxysilane (DCPDMS), and further 6.0 L of a hydrogen gas was changed to 4.0 L of a hydrogen gas.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, and the molecular weight distributions (Mw/Mn and Mz/Mw) of the polymer. The results are shown in Table 2.

(Example 9)

The formation of a polymerization catalyst and the polymerization were carried out in the same method as in Example 4, in the exception that the solid catalyst component obtained in Example 4 was used, and in "2. Formation of a polymerization catalyst and polymerization" of Example 1, 6.0 L of a hydrogen gas was changed to 9.0 L of a hydrogen gas.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, and the molecular weight distributions (Mw/Mn and Mz/Mw) of the polymer, and the elution percentage of the polymer at a high temperature (CFC). The results are shown in Table 2.

(Comparative Example 1)

A solid catalyst component was prepared in the same manner as in Example 4, in the exception that, in "1. Synthesis of a solid catalyst component" (ii) of Example 4, 3.0 ml (11.2 mmol) of diethyl diisopropylsuccinate was changed to 2.0 mL (7.4 mmol), and in Example 4 (iii), 3.0 ml (11.2 mmol) of diethyl diisopropylsuccinate was changed to 2.0 mL (7.4 mmol).

The titanium content and the content of the succinic acid diester compound in the obtained solid solid catalyst component were measured and found to be 5.4% by mass and 15.6% by mass, respectively. Additionally, the ratio represented by a content of the succinic acid diester compound/a content of titanium was 0.54 in a molar ratio. Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, the molecular weight distributions (Mw/Mn and Mz/Mw) of the polymer, and the elution percentage of the polymer at a high temperature (CFC). The results are shown in Table 2.

(Comparative Example 2)

1. Synthesis of a solid catalyst component

Diethyl diisopropylsuccinate (succinic acid), which is a succinic acid diester compound, was employed as the internal electron-donating compound, and a solid catalyst component for polymerization of an olefin was prepared by the following method.

(i) A flask having an internal volume of 500 mL, equipped with a stirrer and purged with a nitrogen gas was charged with 40 g (365 mmol) of titanium tetrachloride and 50.0 mL of toluene to form a mixed solution.
(ii) Subsequently, a suspension formed by mixing 20 g (174.8 mmol) of diethoxy magnesium, 60 mL of toluene, and 6.0 mL (22.4 mmol) of diethyl diisopropylsuccinate was added to the above mixed solution maintained at a solution temperature of -6°C to obtain an initial contact product containing solution.
(iii) The temperature of the above initial contact product containing solution was raised to continue the reaction for 90 minutes while maintaining 100°C. After completing the reaction, the supernatant was removed, and the first contact product, which is the reaction product, was washed 4 times with 150 mL of toluene at 90°C.
(iv) Then, 100 mL of toluene and 40.0 mL (365 mmol) of titanium tetrachloride were added to the above first contact product, the temperature was raised to 100°C to continue the reaction for 15 minutes. After completing the reaction, the supernatant was removed, and the final contact product was obtained. Subsequently, the obtained final contact product was washed 6 times with 150 mL of n-heptane at 40°C, the solid and liquid were separated thereby to obtain the solid catalyst component (the solid catalyst component for polymerization of an olefin).

The solid and liquid of the obtained solid catalyst component were separated, and the titanium content and the content of the succinic acid diester compound in the obtained solid content were measured and found to be 2.4% by mass and 14.6% by mass, respectively. Additionally, the ratio represented by a content of the succinic acid diester compound/a content of titanium was 1.11 in a molar ratio.

Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, and the elution percentage of the polymer at a high temperature (CFC). The results are shown in Table 2.

(Comparative Example 3)

A solid catalyst component was prepared in the same manner as in Example 5, in the exception that, in "1. Synthesis of a solid catalyst component" (i) of Example 5, 90 mL (821 mmol) of titanium tetrachloride was changed to 40 mL (365 mmol) of titanium tetrachloride and 50.0 mL of toluene, and further diethyl diisopropylsuccinate in (iii) was changed from 6.02 mL (22.4 mmol) to 3.15 mL (11.7 mmol).

The titanium content, the contents of the succinic acid diester compound, and the carbonate compound in the obtained solid solid catalyst component were measured and found to be 2.5% by mass, 7.6% by mass, and 4.3% by mass, respectively. Additionally, the ratio represented by a content of the succinic acid diester compound/a content of titanium was 0.57 in a molar ratio. Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the molecular weight distributions (Mw/Mn and Mz/Mw) of the polymer, and the elution percentage of the polymer at a high temperature (CFC). The results are shown in Table 2.

(Comparative Example 4)

1. Synthesis of a solid catalyst component

A 200 mL round-bottomed flask equipped with a stirrer and purged with a nitrogen gas was charged with 10 g (87.4 mmol) of diethoxy magnesium, 2.5 mL (9.4 mmol) of di-n-butyl phthalate and 50 mL of toluene to form a suspended state. Subsequently, the suspension was added to a homogeneous solution of 30 mL of toluene and 20 mL (0.18 mol) of titanium tetrachloride charged in advance in a 500 mL round-bottomed flask equipped with a stirrer and purged with a nitrogen gas.

Then, the temperature was raised with stirring, 1.2 mL (4.5 mmol) of di-n-butyl phthalate was added at 60°C while raising the temperature, and the temperature was further raised to 110°C to continue the reaction for 2 hours while maintaining the same temperature. After completing the reaction, the supernatant was removed, and the product was washed 4 times with 100 mL of toluene at 105°C.

Subsequently, 40 mL of toluene and 20 mL (0.18 mol) of titanium tetrachloride were added, the temperature was raised to 105°C with stirring to continue the reaction for 2 hours at 105°C, and the product was washed 8 times with 75 mL of n-heptane at 40°C.

The titanium content of titanium in the obtained solid solid catalyst component was measured and found to be 1.92% by mass. Additionally, the ratio represented by a content of the succinic acid diester compound/a content of titanium was 0.00 in a molar ratio. Table 1 shows the properties of the obtained solid catalyst component.

Subsequently, the formation of a polymerization catalyst and the polymerization were carried out in the same method as in "2. Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, the molecular weight distributions (Mw/Mn and Mz/Mw) of the polymer, and the elution percentage of the polymer at a high temperature (CFC). The results are shown in Table 2.

(Comparative Example 5)

1. Synthesis of a solid catalyst component

A 300 mL round-bottom flask equipped with a stirrer and purged with a nitrogen gas was charged with 7.8 g (33.3 mmol) of $MgCl_2 \cdot 3H_2O$ and 50 mL of n-decane, and then stirred at room temperature. Then, a 500 mL round-bottom flask equipped with a stirrer and purged with a nitrogen gas was charged with 100 mL (0.91 mmol) of titanium tetrachloride and cooled to -15°C. To this titanium tetrachloride, the suspension of $MgCl_2 \cdot 3H_2O$ and n-decane was added dropwise over a period of 1 hour.

Then, the temperature was raised with stirring, 1.1 mL (4.3 mmol) of diethyl diisopropylsuccinate was added at 60°C while raising the temperature, and further the temperature was raised to 110°C to continue the reaction for 2 hours while maintaining the same temperature. After completing the reaction, the supernatant was removed, and the product

was washed 4 times with 100 mL of toluene at 100°C.

Subsequently, 100 mL of toluene and 20 mL (0.18 mol) of titanium tetrachloride were added, the temperature was raised to 100°C with stirring to continue the reaction for 15 minutes at 100°C, then the supernatant was removed, the same operation was carried out 3 times, and the product was washed 7 times with 100 mL of n-heptane at 40°C to prepare the solid catalyst component.

The titanium content and the content of succinic acid diester compound in the obtained solid solid catalyst component were measured and found to be 3.47% by mass and 6.6% by mass. Additionally, the ratio represented by a content of the succinic acid diester compound/a content of titanium was 0.35 in a molar ratio. Table 1 shows the properties of the obtained solid catalyst component.

Subsequently, the formation of a polymerization catalyst and the polymerization were carried out in the same method as in **"2.** Formation of a polymerization catalyst and polymerization" of Example 1, in the exception that the above solid catalyst component was used.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, the molecular weight distributions (Mw/Mn and Mz/Mw) of the polymer, and the elution percentage of the polymer at a high temperature (CFC). The results are shown in Table 2.

(Comparative Example 6)

1. Synthesis of a solid catalyst component

(i) A 300 mL round-bottom flask equipped with a stirrer and purged with a nitrogen gas was charged with 5.7 g (60.0 mmol) of magnesium chloride anhydrous, 30 mL of n-decane, and 28 mL (179.0 mmol) of 2-ethylhexyl alcohol, the reaction was carried out with heating at 130°C for 2 hours to prepare a homogeneous solution, and then 2.4 mL (8.8 mmol) of diethyl diisopropylsuccinate was added to this solution and further stirred at 130°C for 1 hour.

(ii) The thus obtained homogenous solution was cooled to room temperature, and then the whole volume thereof was charged dropwise over a period of 1 hour in 240 mL (2.2 mol) of titanium tetrachloride maintained at -20°C. The temperature of this mixed solution was raised to 110°C over a period of 2 hours, 3.2 mL (11.9 mmol) of diethyl diisopropylsuccinate was added when the temperature reached at 90°C, stirred at 110°C for 2 hours, and after completing the 2-hour reaction, the supernatant was removed.

(iii) Then, 240 mL (2.2 mol) of titanium tetrachloride was added, and the reaction was carried out again with heating at 110°C for 2 hours. The product was washed twice with 100 mL of toluene at 110°C and then washed 4 times with 100 mL of n-heptane at 40°C thereby to prepare the solid catalyst component.

The titanium content and the content of the succinic acid diester compound in the obtained solid soild catalyst component were measured and found to be 3.3% by mass and 20.6% by mass, respectively. Additionally, the ratio represented by a content of the succinic acid diester compound/a content of titanium was 1.17 in a molar ratio. The pore volume of a diameter of 1 μm or less in the obtained solid catalyst component was 0.0 $cm^3$, and the specific surface area was 310 $m^2/g$.

[Table 1]

| | Solid catalyst component properties | | | | | |
|---|---|---|---|---|---|---|
| | Titanium content (% by mass) | Succinic acid diester compound content (% by mass) | EEECA* Content (% by mass) | Succinic acid diester compound content/titanium content (mol/mol) | Pore volume of a diameter of 1 μm or less ($cm^3/g$) | Specific surface area ($m^2/g$) |
| Example 1 | 4.2 | 19.0 | 0.0 | 0.84 | 0.4 | 360 |
| Example 2 | 4.4 | 17.4 | 0.0 | 0.73 | 0.5 | 380 |
| Example 3 | 4.3 | 19.7 | 0.0 | 0.85 | 0.4 | 330 |
| Example 4 | 3.2 | 17.4 | 0.0 | 1.01 | 0.4 | 320 |
| Example 5 | 3.2 | 15.0 | 3.3 | 0.86 | 0.5 | 400 |

(continued)

| | Solid catalyst component properties | | | | | |
|---|---|---|---|---|---|---|
| | Titanium content (% by mass) | Succinic acid diester compound content (% by mass) | EEECA* Content (% by mass) | Succinic acid diester compound content/titanium content (mol/mol) | Pore volume of a diameter of 1 μm or less ($cm^3/g$) | Specific surface area ($m^2/g$) |
| Example 6 | 3.2 | 15.2 | 3.4 | 0.89 | 0.4 | 440 |
| Example 7 | 3.5 | 21.6 | 0.0 | 1.15 | 0.5 | 380 |
| Example 8 | 3.2 | 17.4 | 0.0 | 1.01 | 0.4 | 320 |
| Example 9 | 3.2 | 17.4 | 0.0 | 1.01 | 0.4 | 320 |
| Comparative Example 1 | 5.4 | 15.6 | 0.0 | 0.54 | 0.4 | 370 |
| Comparative Example 2 | 2.4 | 14.6 | 0.0 | 1.11 | 0.5 | 400 |
| Comparative Example 3 | 2.5 | 7.6 | 4.3 | 0.57 | 0.5 | 470 |
| Comparative Example 4 | 1.9 | 0.0 | 0.0 | - | 0.5 | 320 |
| Comparative Example 5 | 3.5 | 6.6 | 0.0 | 0.35 | 0.6 | 158 |
| Comparative Example 6 | 3.3 | 20.6 | 0.0 | 1.17 | 0.0 | 310 |

*: EEECA means (2-ethoxyethyl)ethyl carbonate.

[Table 2]

| | Propylene polymer activity (g/g-cat) | Polymer properties | | | | | | | |
|---|---|---|---|---|---|---|---|---|---|
| | | MFR (g/10 min) | Flexural modulus (MPa) | XS (% by mass) | Elution percentage of polymer at high temperature (CFC) | | Oriented layers percentage (%) | Molecular weight distribution | |
| | | | | | Elution percentage at 120°C or more (% by mass) | Elution and molecular weight of 1,000,000 or more at 120°C or more (% by mass) | | Mw/Mn | Mz/Mw |
| Example 1 | 61,000 | 100 | 2180 | 2.42 | 32.3 | 3.5 | 29 | 8.7 | 4.8 |
| Example 2 | 59,700 | 110 | 2120 | 2.36 | 32.3 | 3.4 | 30 | 7.2 | 4.5 |
| Example 3 | 67,400 | 110 | 2140 | - | 32.2 | 3.3 | - | 7.5 | 4.8 |
| Example 4 | 52,400 | 72 | 2150 | 2.18 | 33.2 | 3.7 | 31 | 8.3 | 6.7 |
| Example 5 | 43,600 | 100 | - | 2.45 | - | - | - | 7.7 | 4.4 |
| Example 6 | 44,800 | 92 | - | 2.40 | - | - | - | 7.0 | 3.9 |
| Example 7 | 56,200 | 82 | 2180 | 2.07 | 32.2 | 3.7 | 26 | 7.4 | 4.5 |
| Example 8 | 47,700 | 15 | 2320 | 1.70 | - | - | - | 12.4 | 5.9 |
| Example 9 | 45,300 | 190 | 2020 | 2.90 | 25.2 | 2.5 | - | 9.5 | 12.2 |
| Comparative Example 1 | 58,800 | 119 | 1640 | 2.61 | 24.7 | 2.7 | 12 | 5.9 | 3.6 |
| Comparative Example 2 | 23,300 | 110 | 1980 | 2.30 | 33.5 | 3.4 | - | - | - |
| Comparative Example 3 | 60,000 | 95 | 1867 | 2.47 | 34.6 | 2.9 | - | 7.7 | 4.2 |
| Comparative Example 4 | 79,300 | 90 | 1720 | 1.12 | 40.6 | 2.7 | 12 | 6.4 | 3.3 |
| Comparative Example 5 | 23,800 | 340 | 1560 | 6.40 | 19.22 | 2.0 | 17 | 6.9 | 4.4 |

(Example 10)

<Preparation of an ethylene-propylene copolymerization catalyst>

An autoclave equipped with a stirrer having an internal volume of 2.0 L and purged with a nitrogen gas was charged with 2.4 mmol of triethylaluminum, 0.24 mmol of diisopropyl dimethoxysilane, and 0.0034 mmol, in terms of the titanium atom, of the solid catalyst component obtained in Example 1 to prepare an ethylene-propylene copolymerization catalyst.

<An ethylene-propylene copolymer>

An autoclave equipped with a stirrer containing the above prepared ethylene-propylene copolymerization catalyst was charge with 15 mol (1.2 L) of liquefied propylene and 0.20 MPa (partial pressure) of a hydrogen gas, the preliminary polymerization was carried out at 20°C for 5 minutes, then the temperature was raised, and the propylene homopolymerization reaction (homostage polymerization) of the first stage was carried out at 70°C for 45 minutes. Then, the pressure was returned to normal pressure, subsequently inside the autoclave (in the reactor) was purged with nitrogen, and the autoclave was weighed, whereby the polymerization activity of the homostage (first stage) was calculated by subtracting the tare weight of the autoclave (homoactivity, g/g-cat).

For evaluation of the polymerization performance and polymer physical property (pore volume), a part of the formed polymer was separated.

Subsequently, ethylene/propylene were fed into the above autoclave (into the reactor) so that the respective molar ratio was 0.42/0.58, then the temperature was raised to 70°C, and ethylene/propylene/hydrogen were reacted under the conditions of 1.2 MPa, 70°C for 60 minutes while introducing so that the gas feed volume per minute (L/min) was a ratio of 1.7/2.3/0.086 respectively, thereby to obtain the ethylene-propylene copolymer.

Of the obtained ethylene-propylene copolymer, the following methods were employed to measure the copolymer (ICP) activity (g/g-cat), the melt flow rate (MFR, g/10 min) of the polymer, the block rate (% by mass), and the EPR content rate (% by mass).

<Copolymer (ICP) activity (g/g-cat)>

The copolymer (ICP) activity when forming the ethylene·propylene block copolymer was calculated by the following equation (7).

Copolymer (ICP) activity (g/g - cat) = ((I (g) - G (g))/mass of solid catalyst component contained in catalyst for polymerization of an olefin (g))/reaction time (hour) (7)

I (g) herein is the autoclave mass (g) after completing the copolymerization reaction, and G (g) is the autoclave mass (g) after unreacted monomers were removed after completing the homo PP polymerization.

<Melt flow rate (MFR) of the polymer>

The melt flow rate (MFR) (g/10 min) indicating the melt flow rate of the polymer was measured in conformity with ASTM D 1238, JIS K 7210i.

<Block rate (% by mass)>

The block rate of the ethylene-propylene copolymer was calculated by the following equation (8).

Block rate (% by mass) = {(I (g) - G (g))/(I (g) - F (g))} $\times$ 100 (8)

I herein is the autoclave mass (g) after completing the copolymerization reaction, and G is the autoclave mass (g) after unreacted monomers were removed after completing the homo polypropylene polymerization, and F is the autoclave mass (g).

<EPR content rate>

About 2.5 g of the copolymer, 8 mg of 2,6-di-t-butyl-p-cresol, and 250 mL of p-xylene were fed to a 1 L flask

equipped with a stirrer and a cooling tube and stirred at a boiling point until the copolymer was completely dissolved. Then, the flask was cooled to room temperature, allowed to stand for 15 hours to allow a solid matter to precipitate, and separated the solid matter from the liquid phase part by a centrifuge. Subsequently, the separated solid matter was put in a beaker, 500 mL of acetone was poured and stirred at room temperature for 15 hours, and the solid matter was filtered and dried, whereby a dry mass was measured (this mass is referred to as (B (g)). Additionally, the same operation was carried out on the separated liquid phase part to allow a solid matter to precipitate and dried to measure a dry mass thereof (this mass is referred to as C (g)), whereby the ethylene-propylene rubber component (EPR) content rate in the copolymer was calculated by the following equation (9).

$$\text{EPR Content rate (\% by mass)} = [C (g)/\{B (g) + C (g) \}] \times 100 \quad (9)$$

The results are shown in Table 3.

(Comparative Example 7)

<Preparation of an ethylene-propylene copolymerization catalyst>

The preparation of an ethylene-propylene copolymerization catalyst and the copolymerization reaction were carried out in the same manner as in Example 10, in the exception that the solid catalyst component obtained in Comparative Example 6 was used. During this operation, the ethylene-propylene block copolymerization activity, the block rate, and the EPR content rate were measured by the same methods as in Example 10. The results are shown in Table 3.

(Comparative Example 8)

<Preparation of an ethylene-propylene copolymerization catalyst>

The preparation of an ethylene-propylene copolymerization catalyst and the copolymerization reaction were carried out in the same manner as in Example 10, in the exception that the solid catalyst component obtained in Comparative Example 5 was used. During this operation, the ethylene-propylene block copolymerization activity, the block rate, and the EPR content rate were measured by the same methods as in Example 10. The results are shown in Table 3.

[Table 3]

| | Polymerization result (Homostage) | | Copolymerization result ICP | | | |
|---|---|---|---|---|---|---|
| | Polymerization activity (g/g-cat.) | MFR (g/10 min) | Copolymerization activity (g/g-cat.) | MFR (g/10 min) | Block rate (% by mass) | EPR Content (% by mass) |
| Example 10 | 35,600 | 38 | 8,600 | 11 | 19.4 | 19.3 |
| Comparative Example 7 | 35,100 | 42 | 4,900 | 18 | 12.2 | 15.0 |
| Comparative Example 8 | 19,800 | 130 | 1,800 | 53 | 8.3 | 11.4 |

(Example 11)

<Ethylene-propylene copolymer>

The copolymerization reaction was carried out in the same manner as in Example 10, in the exception that the solid catalyst component obtained in Example 4 was used and the time of the propylene homopolymerization reaction of the first stage was changed from 45 minutes to 30 minutes. During this operation, the ethylene-propylene block copolymerization activity, the MFR, the block rate, the EPR content rate of the obtained copolymer were measured by the same methods as in Example 10. Additionally, the flowability of the ethylene-propylene block copolymer was measured by the following method. The results are shown in Table 4.

<Flowability of the ethylene-propylene block copolymer>

As shown in Figure 4, using an apparatus in which a funnel 1 (upper inlet diameter; 91 mm, diameter at the damper position; 8 mm, inclination angle; 20°, height to the damper position; 114 mm) with a damper 2 installed at an exit position was set at the upper part, and a container-like receiver 3 (inner diameter; 40 mm, height; 81 mm) was set at the lower part of the damper with a space of 38 mm, 50 g of the polymer was first fed to the funnel 1 at the upper part, and then the damper 2 was opened at room temperature (20°C) to allow the polymer to fall into the receiver 3, whereby the time required for the entire polymer to fall was measured. The polymer used was heated in a thermostat at 95°C for 1 hour and then cooled at room temperature for 45 minutes.
Based on the fall time T1 (sec) of 50 g of the ethylene-propylene block copolymer measured by the above operation, the amount of the polymer fell per second (g/sec) was calculated using the following equation (10) and defined as the evaluation indicator of the polymer flowability.

Polymer flowability (amount of polymer fell per second (g/sec) = 50 ÷ T1 (10)

The results are shown in Table 4.

(Comparative Example 9)

<Preparation of an ethylene-propylene copolymerization catalyst>

The preparation of an ethylene-propylene copolymerization catalyst and the copolymerization reaction were carried out in the same manner as in Example 11, in the exception that the catalyst component obtained in Comparative Example 6 was used. During this operation, the ethylene-propylene block copolymerization activity, the block rate, the EPR content rate, and the polymer flowability were measured by the same methods as in Example 11. The results are shown in Table 4.

[Table 4]

| | Polymerization result (Homostage) | | Copolymerization result ICP | | | | |
|---|---|---|---|---|---|---|---|
| | Polymerization activity (g/g-cat.) | MFR (g/10 min) | Copolymerization activity (g/g-cat.) | MFR (g/10 min) | Block rate (% by mass) | EPR Content (% by mass) | Polymer flowability (g/sec) |
| Example 11 | 26,100 | 29 | 5,900 | 10 | 18.4 | 19.7 | 12.6 |
| Comparative Example 9 | 28,500 | - | 5,600 | - | 16.3 | 19.5 | 2.8 |

From Table 1 to Table 4, the solid catalyst components for polymerizing olefins used in Example 1 to Example 10 comprise magnesium titanium, halogen, and the succinic acid diester compound, had the content of the succinic acid diester compound of 15.0% by mass or more, the ratio represented by a content of the succinic acid diester compound/a content of titanium of 0.60 to 1.30 in a molar ratio, the total pore volume of a diameter of 1 μm or less when measured by the mercury intrusion method of 0.3 to 1.0 $cm^3$/g, and the specific surface area of 200 $m^2$/g or more, thereby revealing that these solid catalyst components can easily produce a polymer of an olefin with excellent flowability and high rigidity when used for polymerizing olefins, and further can easily produce a copolymer with a practically sufficient block rate and flowability under excellent copolymerization activity.
On the other hand, from Table 1 and Table 2, the solid catalyst components for polymerizing olefins used in Comparative Example 1 to Comparative Example 5 had the ratio represented by a content of the succinic acid diester compound and a content of titanium of less than 0.60 in a molar ratio (Comparative Example 1, and Comparative Example 3 to Comparative Example 5), and the content of the succinic acid diester compound of less than 15.0% by mass (Comparative Example 2 to Comparative Example 5), thereby revealing that polymers of olefins to be obtained had a flexural modulus (FM) of less than 2,000 MPa (Comparative Example 1 to Comparative Example 4), and a low elution percentage of the polymer at a high temperature (Comparative Example 5) to result in poor rigidity.
Further, from Table 1, Table 3 and Table 4, the solid catalyst components for polymerizing olefins used in Comparative Example 7 and Comparative Example 9 had the total pore volume of a diameter of 1 μm or less measured by

the mercury intrusion method (obtained in Comparative Example 6) of 0.0 $cm^3/g$ (out of the range of 0.3 to 1.0 $cm^3/g$), and the solid catalyst component for polymerization of an olefin used in Comparative Example 8 is obtained in the above Comparative Example 5. For this reason, the copolymerization activity is low, thereby revealing that the obtained copolymers have poor block rates and EPR content rates (Comparative Example 7, Comparative Example 8), and the obtained copolymer had poor flowability (Comparative Example 9).

[Industrial Applicability]

The present invention can accordingly provide the solid catalyst component comprising an internal electron-donating compound other than phthalate esters, and capable of easily producing a polymer of an olefin with an excellent melt flow rate and high rigidity, and further capable of easily producing a copolymer having a practically sufficient block rate and flowability (less stickiness) under excellent copolymerization activity, and can also provide the catalyst for polymerization of an olefin, the method for producing a polymer of an olefin, and the polymer of an olefin.

[Reference Signs List]

1 Funnel
2 Damper
3 Receiver

## Claims

**1.** A solid catalyst component for polymerization of an olefin comprising:

magnesium, titanium, halogen, and a succinic acid diester compound,
wherein a content of the succinic acid diester compound in a total content of the components in terms of the solid content is 15.0% by mass or more,
a ratio (S/T), represented by a content of the succinic acid diester compound (S) in the total content of the components to a content of the titanium (T) in the total content of the components, is 0.60 to 1.30 in a molar ratio, and
a total pore volume of a diameter of 1 μm or less as measured by a mercury intrusion method is 0.3 to 1.0 $cm^3/g$, and a specific surface area is 200 $m^2/g$ or more.

**2.** The solid catalyst component for polymerization of an olefin according to claim 1, wherein the succinic acid diester compound is one or more compounds selected from the compounds represented by the following formula (1):

[Formula 1]

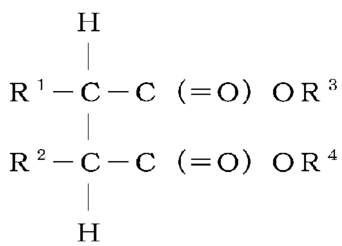

(1)

wherein $R^1$ and $R^2$, the same as or different from each other, are a hydrogen atom or an alkyl group having 1 to 4 carbon atoms, and $R^3$ and $R^4$, the same as or different from each other, are a straight chain alkyl group or a branched chain alkyl group having 2 to 4 carbon atoms.

**3.** A method for producing a solid catalyst component for polymerization of an olefin by allowing dialkoxy magnesium, a titanium halogen compound and a succinic acid diester compound to mutually contact,

wherein the titanium halogen compound is allowed to contact the dialkoxy magnesium multiple times, of which

when the titanium halogen halogen compound is allowed to contact the dialkoxy magnesium for the first time, 1.5 to 10.0 mol of the titanium halogen compound per mol of the dialkoxy magnesium is used,
wherein a total amount of the titanium compound used per mol of the dialkoxy magnesium is 5.0 to 18.0 mol, and an amount of the succinic acid diester compound used per mol of the dialkoxy magnesium is 0.10 to 0.20 mol.

**4.** A catalyst for polymerization of an olefin comprising:

(I) the solid catalyst component for polymerization of an olefin according to claim 1 or claim 2, and
(II) an organoaluminum compound represented by the following formula (2):

$$R^5{}_pAlQ_{3-p} \qquad (2)$$

wherein $R^5$ is an alkyl group having 1 to 6 carbon atoms, Q is a hydrogen atom or halogen, and p satisfies $0 < p \leq 3$, wherein when more than one $R^5$ are present, each $R^5$ may be the same as or different from each other, and when more than one Q are present, each Q may be the same or different.

**5.** A catalyst for polymerization of an olefin comprising:

(I) the solid catalyst component for polymerization of an olefin according to claim 1 or claim 2,
(II) an organoaluminum compound represented by the following formula (2):

$$R^5{}_pAlQ_{3-p} \qquad (2)$$

wherein $R^5$ is an alkyl group having 1 to 6 carbon atoms, Q is a hydrogen atom or halogen, and p satisfies $0 < p \leq 3$, wherein when more than one $R^5$ are present, each $R^5$ may be the same as or different from each other, and when more than one Q are present, each Q may be the same or different, and
(III) an external electron-donating compound.

**6.** A method for producing a polymer of an olefin, comprising polymerizing an olefin using the catalyst for polymerization of an olefin according to claim 4.

**7.** A method for producing a polymer of an olefin, comprising polymerizing an olefin using the catalyst for polymerization of an olefin according to claim 5.

**8.** A polymer of an olefin having:

(a) a melt flow rate of 0.5 g/10 min to 200.0 g/10 min, and
(b) a flexural modulus of 2,000 MPa or more.

**9.** The polymer of an olefin according to claim 8, wherein a percentage of oriented layers at the cross section of an injection molded plate formed of the polymer of an olefin is 20% or more.

**10.** The polymer of an olefin according to claim 8 or claim 9, formed of a propylene polymer,

wherein, when the polymer of an olefin is measured by cross fractionation chromatography at a measuring temperature of 40 to 140°C,
a percentage of a total amount of a polymer of an olefin eluting at a measuring temperature of 120°C or more in a total amount of the polymer of an olefin to be measured is 20% by mass or more, and
a content percentage of the polymer of an olefin having a molecular weight of 1,000,000 or more in the total amount of the polymer of an olefin eluting at a measuring temperature of 120°C or more is 3% by mass or more.

[Fig.1]

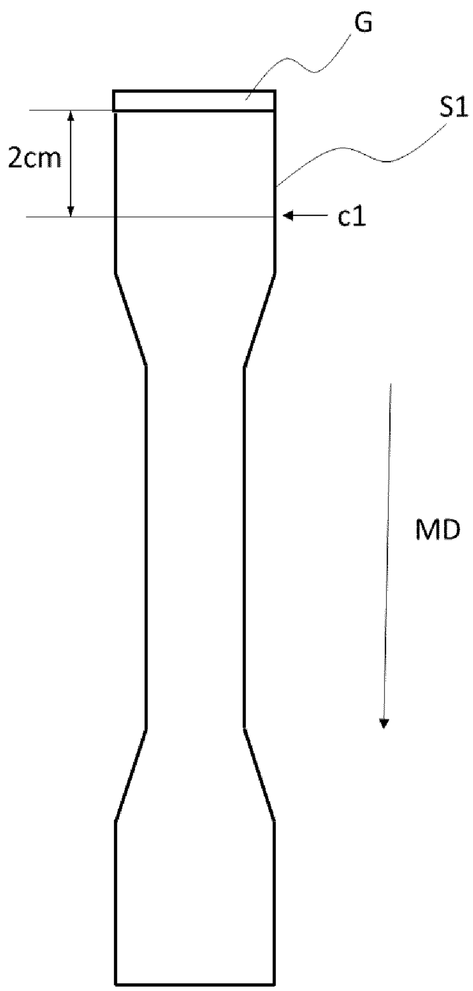

[Fig.2]

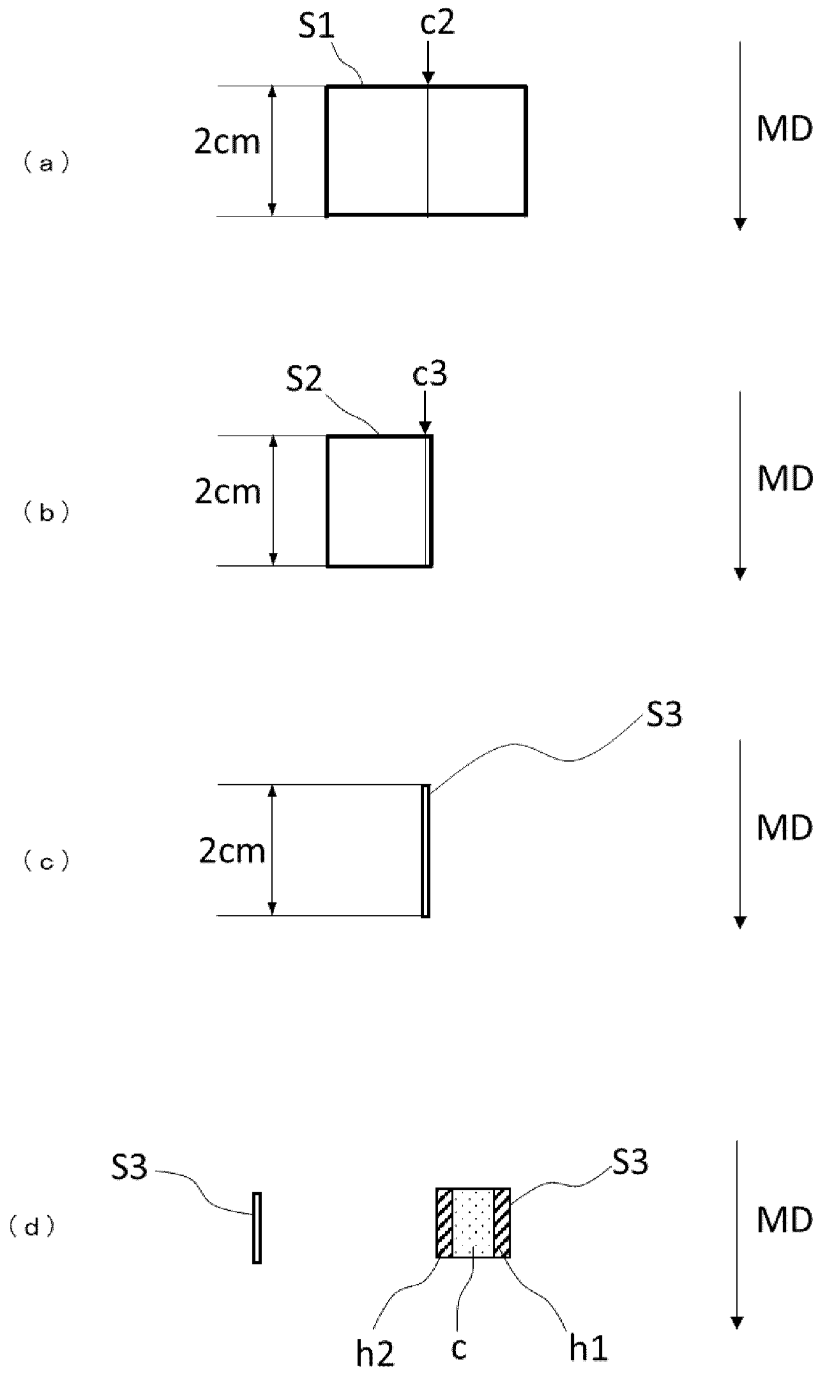

[Fig.3]

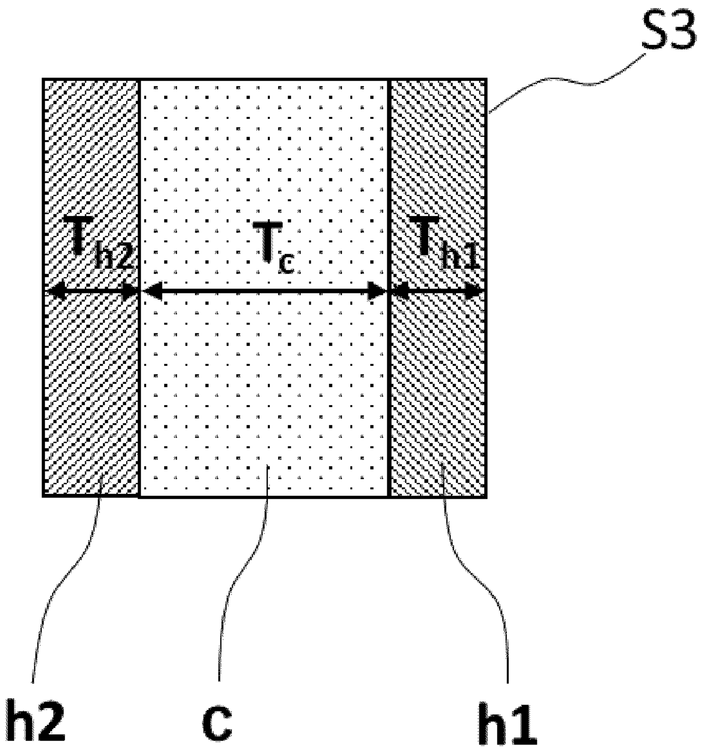

[Fig.4]

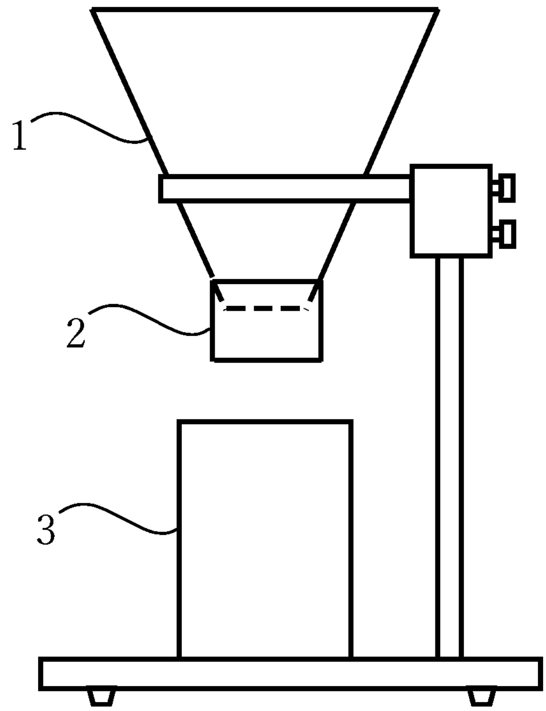

**INTERNATIONAL SEARCH REPORT**

International application No.
**PCT/JP2023/006922**

**A. CLASSIFICATION OF SUBJECT MATTER**

***C08F 4/654***(2006.01)i; ***C08F 10/06***(2006.01)i
FI: C08F4/654; C08F10/06

According to International Patent Classification (IPC) or to both national classification and IPC

**B. FIELDS SEARCHED**

Minimum documentation searched (classification system followed by classification symbols)

C08F4/654; C08F10/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2021/220645 A1 (TOHO TITANIUM CO., LTD.) 04 November 2021 (2021-11-04) claims, paragraph [0084], example 1 | 1, 2, 4-7 |
| Y | JP 3-62805 A (HIGHMOUNT INC.) 18 March 1991 (1991-03-18) claims, examples | 1, 2, 4-7 |
| Y | JP 2005-513213 A (BASELL POLIOLEFINE ITALIA S.P.A.) 12 May 2005 (2005-05-12) claims, paragraphs [0027], [0028] | 1, 2, 4-7 |
| Y | JP 3-273009 A (IDEMITSU PETROCHEMICAL CO., LTD.) 04 December 1991 (1991-12-04) claims, examples | 1, 2, 4-7 |
| X | JP 2002-542347 A (BASELL TECHNOLOGY COMPANY B.V.) 10 December 2002 (2002-12-10) claims, paragraphs [0022], [0023], [0038], examples 1, 10 | 1, 2, 4-7 |
| X | JP 2011-500907 A (BASELL POLIOLEFINE ITALIA S.R.L.) 06 January 2011 (2011-01-06) claims, paragraphs [0001], [0002], [0021], examples 1-3 | 1, 2, 4-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **23 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/006922

C. DOCUMENTS CONSIDERED TO BE RELEVANT

| Category* | Citation of document, with indication, where appropriate, of the relevant passages | Relevant to claim No. |
|---|---|---|
| A | JP 2006-199738 A (TOHO CATALYST CO., LTD.) 03 August 2006 (2006-08-03) entire text | 1, 2, 4-7 |
| A | WO 2018/066535 A1 (TOHO TITANIUM CO., LTD.) 12 April 2018 (2018-04-12) entire text | 1, 2, 4-7 |
| A | JP 58-138708 A (MITSUI PETROCHEMICAL INDUSTRY KK) 17 August 1983 (1983-08-17) entire text | 1, 2, 4-7 |
| A | JP 2019-65131 A (TOHO TITANIUM CO., LTD.) 25 April 2019 (2019-04-25) entire text | 1, 2, 4-7 |

Form PCT/ISA/210 (second sheet) (January 2015)

**INTERNATIONAL SEARCH REPORT**

International application No.
**PCT/JP2023/006922**

**Box No. III Observations where unity of invention is lacking (Continuation of item 3 of first sheet)**

This International Searching Authority found multiple inventions in this international application, as follows:

The number of inventions of the international application set forth in claims 1-10 is three.
Invention 1: The invention as in claims 1-2 and 4-7
Invention 2: The invention as in claim 3
Invention 3: The invention as in claims 8-10

・Invention 2 has no stipulation that the olefin polymerizing solid catalyst component is the olefin polymerizing solid catalyst component as in invention 1, and even when taking common technical knowledge into consideration, it is not considered to be uniquely signified that the olefin polymerizing solid catalyst component as in invention 1 is manufactured by the manufacturing method according to invention 2. Furthermore, invention 2 and invention 1 have the shared technical feature of "an olefin polymerizing solid catalyst component containing magnesium, titanium, and diethyl succinate". However, this technical feature is disclosed in document 1, and thus is not a special technical feature.

・Invention 3 and invention 1 have the shared technical feature of an "olefin polymer", but this is so well known that it is not necessary to cite the documents, and is not a special technical feature.

・Invention 2 and invention 3 have the shared technical feature of an "olefin polymer", but this is so well known that it is not necessary to cite the documents, and is not a special technical feature.

Document: JP2019-65131A

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Invention 1: The invention as in claims 1-2 and 4-7**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2023/006922**

| Patent document cited in search report | Publication date (day/month/year) | Patent family member(s) | Publication date (day/month/year) |
|---|---|---|---|
| WO 2021/220645 A1 | 04 November 2021 | CN 115515988 A<br>TW 202146470 A | |
| JP 3-62805 A | 18 March 1991 | US 5221651 A<br>claims, examples<br>EP 395083 A2 | |
| JP 2005-513213 A | 12 May 2005 | US 2004/0077490 A1<br>claims, paragraphs [0005], [0006]<br>WO 2003/054035 A1<br>EP 1453867 A1<br>CN 1518562 A<br>TW 200409780 A | |
| JP 3-273009 A | 04 December 1991 | (Family: none) | |
| JP 2002-542347 A | 10 December 2002 | US 2005/0032633 A1<br>claims, examples, paragraphs [0022], [0023], [0041], examples 1, 10<br>EP 1088009 A1 | |
| JP 2011-500907 A | 06 January 2011 | US 2010/0249330 A1<br>claims, paragraphs [0001], [0002], [0017], examples 1-3<br>WO 2009/050045 A2<br>EP 2201049 A2<br>CN 101821303 A<br>TW 200930731 A | |
| JP 2006-199738 A | 03 August 2006 | (Family: none) | |
| WO 2018/066535 A1 | 12 April 2018 | (Family: none) | |
| JP 58-138708 A | 17 August 1983 | (Family: none) | |
| JP 2019-65131 A | 25 April 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 57063310 A
- JP 62051633 A
- JP 3074341 A
- JP 4368391 A
- JP 8073388 A